# EUROPÄISCHE PATENTSCHRIFT

(11) **EP 1 352 500 B1**
(45) Veröffentlichungstag und Bekanntmachung des Hinweises auf die Patenterteilung: **25.01.2012**
(21) Anmeldenummer: 01273297.0
(22) Anmeldetag: 12.12.2001
(51) Int. Cl.: H04L 29/06

(54) **VERFAHREN UND MOBILTELEKOMMUNIKATIONSGERÄT ZUR DATENÜBERTRAGUNG IN EINEM MOBILFUNKNETZ**
METHOD AND MOBILE TELECOMMUNICATIONS DEVICE FOR TRANSMITTING DATA IN A MOBILE RADIO NETWORK
PROCEDE ET DISPOSITIF DE TELECOMMUNICATION MOBILE PERMETTANT LA TRANSMISSION DE DONNEES DANS UN RESEAU DE TELEPHONIE MOBILE

(30) Priorität: 18.01.2001 EP 01101057; 31.01.2001 EP 01102229; 23.03.2001 EP 01107278
(43) Veröffentlichungstag der Anmeldung: 15.10.2003
(73) Patentinhaber: SIEMENS AKTIENGESELLSCHAFT, 80333 München (DE)
(72) Erfinder: SCHMIDT, Andreas, 38114 Braunschweig (DE); TRAUBERG, Markus, 38159 Velchede (DE); LAUMEN, Josef, 31141 Hildesheim (DE)
(86) Internationale Anmeldenummer: PCT/EP2001/014617
(87) Internationale Veröffentlichungsnummer: WO 2002/058359

(56) Entgegenhaltungen:
- WO-A-00/64110
- N. BORENSTEIN, N. FREED: "MIME (Multipurpose Internet Mail Extensions) Part One: Mechanisms for Specifying and Describing the Format of Internet Message Bodies" [Online] , NETWORK WORKING GROUP, RFC 1521 XP002170350 Gefunden im Internet: <URL: http://www.ietf.org/rfc/rfc1521.txt?number =1521> [gefunden am 2001-06-21] Seite 39-44
- KERVELLA B ET AL: "MHEGAM - A MULTIMEDIA MESSAGING SYSTEM" IEEE MULTIMEDIA,US,IEEE COMPUTER SOCIETY, Bd. 4, Nr. 4, 1. Oktober 1997 (1997-10-01), Seiten 22-29, XP000726939 ISSN: 1070-986X
- MOELLER E ET AL: "The BERKOM multimedia-mail teleservice" COMPUTER COMMUNICATIONS,NL,ELSEVIER SCIENCE PUBLISHERS BV, AMSTERDAM, Bd. 18, Nr. 2, 1. Februar 1995 (1995-02-01), Seiten 89-102, XP004032505 ISSN: 0140-3664

## Beschreibung

Die Erfindung betrifft ein Verfahren zur Datenübertragung in einem Mobilfunknetz nach dem Oberbegriff des Anspruchs 1 sowie ein mobiles Telekommunikationsgerät nach dem Oberbegriff des Anspruchs 26, ein Computerprogrammerzeugnis nach Anspruch 30, sowie ein Funkkommunikationssystem nach Anspruch 32.

Bisherige Mobilfunknetze, wie etwa das nach dem GSM-Standard arbeitende Netz, eröffnen noch recht eingeschränkte Möglichkeiten zur Übertragung von Textdaten. So können etwa bis zu 160 Zeichen umfassende Kurznachrichten übertragen werden. Diese Einrichtung wird als SMS (Short Message Service) bezeichnet. Für die Kosten des Versands derartiger Textnachrichten hat der Datenversender aufzukommen.

Zukünftig soll auch eine Übertragung von Multimediadaten, insbesondere stehenden oder bewegten Bildern mit oder ohne Ton, möglich sein. Es ist mit einer erheblichen Ausweitung der Datenübertragungsmengen und der Datentypen innerhalb solcher übertragungen zu rechnen, was mit erhöhter Übertragungszeit und einer Kostensteigerung einhergeht.

Aus der WO 00 64110 A ist ein Verfahren bekannt, welches den Versandt von Multimedianachrichten in einem Mobilfunkkommunikationssystem derart regelt, dass die verwendeten mobilen Endgeräte vor Nachrichteninhalten, die sie nicht handhaben können, dadurch zu schützen, dass diese Nachrichten vorab an zentraler Stelle im Mobilfunkkommunikationszystem nach Endgeräteeigenschaften oder durch das Endgerät bzw. seinem Nutzer ganz oder teilweise aussortiert werden können.

Aus N. Borenstein, N. Freed: "MIME (Multipurpose Internet Mail Extensions) Part One: Mechanisms for Specifying and Describing the Format of Internet Message Bodies" [Online], NETWORK WORKING GROUP, RFC 1521 XP002170350, ist ein Verfahren zur Handhabung von Mails verschiedener Typen von Inhalten bekannt, bei dem die Header der hierzu notwendigen Datenpakete mit entsprechenden Informationen belegt werden.

Der Erfindung liegt das Problem zugrunde, die Kontrolle der Datenübertragung für Teilnehmer eines Mobilfunknetzes zu vereinfachen.

Die Erfindung löst dieses Problem durch ein Verfahren mit den Merkmalen des Anspruchs 1, sowie durch ein Mobiltelekommunikationsgerät mit den Merkmalen des Anspruchs 25

Hinsichtlich vorteilhafter Ausgestaltungen wird auf die Ansprüche 2 bis 24 und 26 bis 29 verwiesen.
Mit dem erfindungsgemäßen Verfahren ist eine Information an den Datenempfänger über Charakteristika der zum Empfang bereitstehenden Daten möglich, was diesem die Kontrolle hierüber erleichtert.

Bei Vorabzusendung des oder der Charakteristika der zu übersendenden Daten angebenden Identifikationssignal(e) ist die Kontrolle bereits vor Empfang der eigentlichen Daten ermöglicht, wobei besonders vorteilhaft dem Empfänger anhand der so erhaltenen Information eine Auswahlmöglichkeit eröffnet ist, ob er die bereitstehenden Daten jetzt oder später oder gar nicht empfangen möchte. Wenn auch die Wahlmöglichkeit eines teilweisen Empfangs einer Multimedia message (MM) vorgesehen ist, kann der Empfänger beispielsweise nur für ihn wichtige Kurzinformationen, die eine kurze Übertragungszeit benötigen, herunterladen und eventuell zugehörige speicherintensive Bildbestandteile oder ähnliches später oder gar nicht herunterladen.

wenn das dafür eingesetzte Identifizierungssignal Information über die Größe eines zu empfangenden Datensatzes enthält, kann der Empfänger daran ermitteln, wieviel Zeit er für die Übertragung und/oder das Studium der Daten rechnen muß und ob er diese Zeit jetzt oder zu einem späteren Zeitpunkt oder gar nicht aufbringen will.

Wenn das Identifizierungssignal Information über den Namen eines Datensatzes enthält, kann der Empfänger daran ermitteln, aus welchem Themenkomplex die Daten stammen. Auch daran kann er vorteilhaft auswählen, ob er diesen oder diese Daten satz oder Datensätze jetzt oder zu einem späteren zeitpunkt oder gas nicht empfangen will.

Besonders vorteilhaft kann im Identifikationssignal auch Information über den Datentyp gegeben sein, so daß der Empfänger weiß, ob es sich beispielsweise um Bilddaten, Textdaten und/oder Musikdaten handelt.

Kontrolle und Transparenz sind damit entscheidend verbessert.

Weitere Vorteile und Merkmale der Erfindung ergeben sich aus in den Zeichnungen neu dargestellten und nachfolgend beschriebenen Ausführungsbeispielen des Gegenstandes der Erfindung.

Es zeigen:
- Fig. 1: eine schematische Abbildung von einer Datenübertragung zugeordneten Sendungen gemäß dem WAP-Standard (Wireless application protocoll) zwischen der Ebene des Versenders und der des Providers einerseits und der Ebene des Providers und der des Empfängers andererseits,
- Fig. 2: die Header-Felder einer nach dem in Fig. 1 gezeigten WAP-Standard gesendeten Nachricht M-Send.req, wobei die erfindungsgemäß neu eingefügten HeaderFelder grau unterlegt sind,

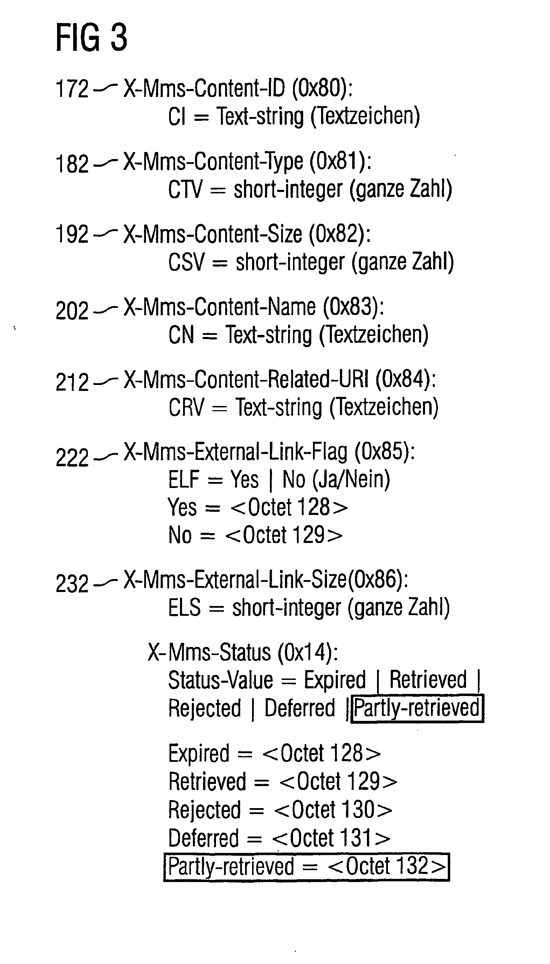

- Fig. 3: eine Spezifizierung des Typs der in Fig. 2 gezeigten und in den grau unterlegten Feldern abgelegten Informationen sowie des zusätzlich im Statusbericht auftretenden Feldes über den Erhalt der versandten Daten,
- Fig. 4: eine Darstellung der Zuweisung der Header-Felder aus Fig. 2 zu den binären Codes, wobei die erfindungsgemäß neu eingefügten Header-Felder grau unterlegt sind,
- Fig. 5: eine ähnliche Darstellung wie Fig. 2 der nach dem in Fig. 1 gezeigten WAP-Standard gesendeten Nachricht M-Notification.ind (MNI),

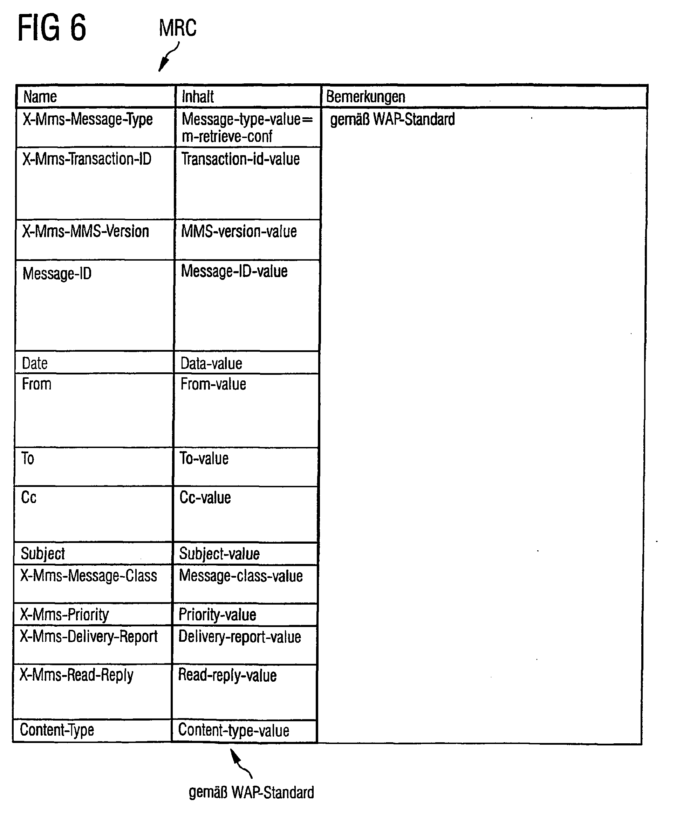

- Fig. 6: eine ähnliche Darstellung wie Fig. 2 der nach dem in Fig. 1 gezeigten WAP-Standard gesendeten Nachricht M-Retrieve.conf (MRC),
- Fig. 7: eine ähnliche Darstellung wie Fig. 2 der nach dem in Fig. 1 gezeigten WAP-Standard gesendeten Nachricht M-Acknowledge.ind (MAI),
- Fig. 8: eine ähnliche Darstellung wie Fig. 2 der nach dem in Fig. 1 gezeigten WAP-Standard gesendeten Nachricht M-Delivery.ind.(MDI),
- Figuren 9-17 und 23-25: jeweils exemplarisch den Inhalt verschiedener Informationssignale für die Übertragung von Multimedianachrichten zwischen mehreren Komponenten eines Funkkommunikationssystems nach dem erfindungsgemäβen Verfahren,
- Figur 18: das Encoding eines einzigen Header-Feld-Namens,
- Figur 19: Encoding (Kodierung) der neuen Parameternamen und Parameterwerte im einzigen Headerfeld nach Figur 9,
- Figur 20: Zuweisung binärer Codes zu den Feldnamen der Parameter im einzigen Headerfeld nach Figur 9,
- Figur 21A,: 21B das einzige Header-Felder einer Multimedia Service (MMS) Sendeanfrage (in WAP Message M- *Send.req;*)*,* und
- Figur 22: das zur Sendeanfrage MSreq nach Figur 12A, 12B zugehörige Header-Felder der MMS Empfängerbenachrichtigung (M-Nind; in WAP Message *M-Notification.ind* ;)

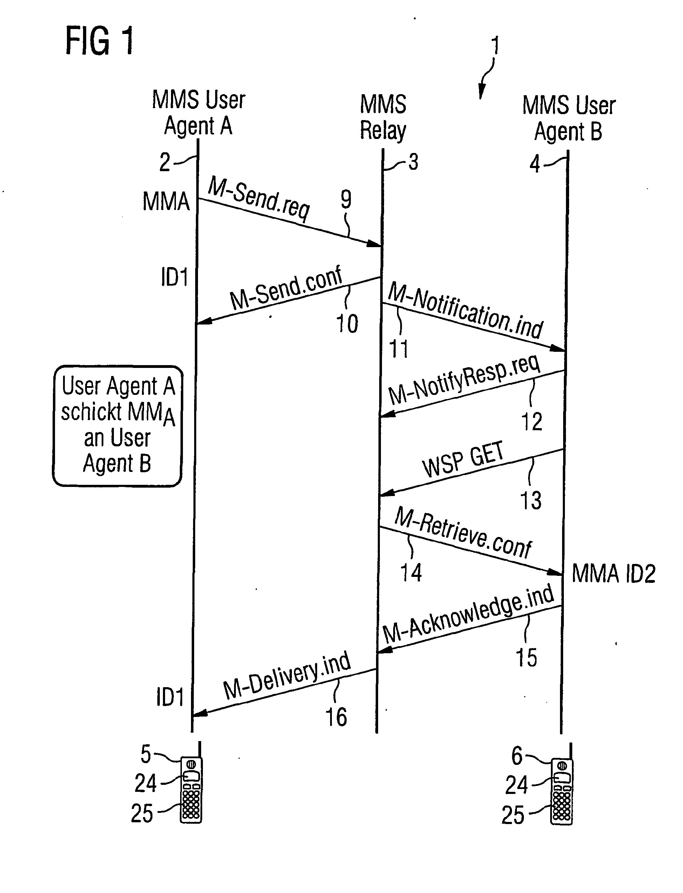

Elemente mit gleicher Funktion und Wirkungsweise sind in den Figuren 1 mit 13 jeweils mit denselben Bezugszeichen versehen.

Im Ausführungsbeispiel ist die Anwendung der Erfindung auf ein Datenübertragungsschema 1 für den WAP-Standard, wie es in der Übertragung von insbesondere Bilddaten und formatierten Textdaten im UMTS-Standard (Universal mobile telecommunication standard) Verwendung finden wird, beschrieben. Es versteht sich, daß die Erfindung auch auf andere Standards übertragbar ist.

Im UMTS-Standard ist vorgesehen, zusätzlich zum bisherigen SMS einen sogenannten MMS (Multimedia Messaging Service) für die Übertragung von Nachrichten, auch als Multimedia messages (MMs) bezeichnet, vorzusehen. Damit können auch formatierte Texte und Bilder mit und ohne Ton übertragen werden. Die im SMS vorhandene Beschränkung auf eine Nachrichtenlänge von 160 Zeichen entfällt. Eine Übertragung von Audio- und Videonachrichten ist möglich.

MMS ist über die Nutzung von WAP realisierbar. Dabei wird für die Funkübertragung von Daten, etwa von Multimedia Messages (MMs), das in Fig. 1 dargestellte Protokollschema (WAP WSP: Wireless Session Protocoll) angewandt. Dieses umfaßt eine Ebene 2 eines Datenversenders (auch als MMS User Agent A bezeichnet), eine Ebene 3 eines Providers (, dessen Netzelement, das den Service ausführt, auch als MMS Relay bezeichnet wird) und eine Ebene 4 eines Empfängers (auch als MMS User Agent B bezeichnet). Die Ebene 2 des Datenversenders umfaßt zumindest ein Telekommunikationsgerät 5, ebenso umfaßt die Ebene 4 des Empfängers ein Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, ausgebildet sein.

Eine im Telekommunikationsgerät 5 des Versenders verfaßte oder über dieses weiterzuleitende Multimedia message abgekürzt (MM) kann einen oder mehrere Einheiten (Datensätze 7), beispielsweise einzelne Bilder, Filmsequenzen, Texte oder ähnliches, enthalten. Die MM wird zunächst als Anfrage-Sendung 9 (diese trägt im WAP-Protokoll den Namen M-Send.req) an den Provider (Ebene 3) versandt.

Von dort wird die eingegangene Sendung 9 mit der Rücksendung 10 (M-send.conf) an den Versender (Ebene 2) quittiert.

Zeitlich darauffolgend wird vom Provider (Ebene 3) die Information 11 (M-Notification.ind) an den Empfänger (Ebene 4) gesandt, mit der dieser darüber informiert wird, daß für ihn eine Nachricht beim Provider 3 zum Herunterladen bereitliegt.

Hierüber erhält der Provider 3 beispielsweise automatisch die quittierende Rückmeldung 12 (M-NotifyResp.req) vom Telekommunikationsgerät 6 des Empfängers (Ebene 4).

Erst auf Anforderung durch den Empfänger mit der Sendung 13 (WSP GET.req) wird vom Provider die MM mit der Sendung 14 (M-retrieve.com) an den Empfänger weitergeleitet.

Die Nachricht 15 (M-Acknowledge.ind) quittiert den Empfang der MM.
Die abschließende Nachricht 16 (M-Delivery.ind) gibt eine Empfangsbestätigung an den Versender 2 zurück.

Zur Verwaltung der Sendungen 9, 10, 11, 12, 14, 15, 16 dienen die sog. Header-Felder, also der eigentlichen MM vorangestellte Felder, in denen Informationen über die Herkunft, Sendezeit, Dateigröße und weitere Details enthalten sein können.

Erfindungsgemäß ist die Anzahl der Header-fields erhöht, um zumindest ein weiteres Feld 17, 18, 19, 20, 21, 22, 23 als Informationsfeld(er) über charakterisierende Parameter der MM informieren zu können und darin ein oder mehrere Identifizierungssignal(e) für diese(n) Parameter dem Empfänger 4 zusenden zu können.

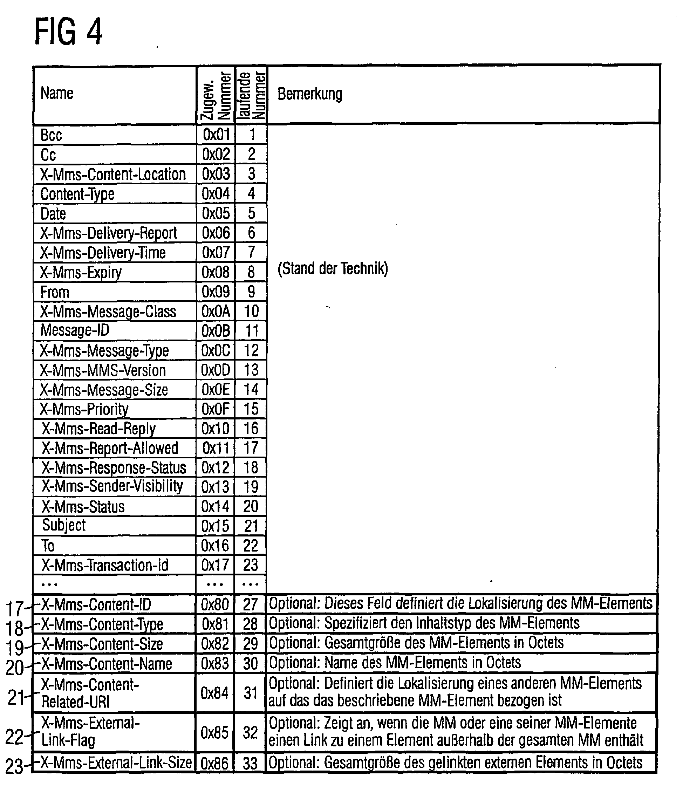

Im Ausführungsbeispiel sind dafür (sh. Fig. 4) die mit 0x80 bis 0x86 im Hexadezimalsystem adressierten Felder 17, 18, 19, 20, 21, 22, 23 vorgesehen, um die Information über die Parameter, die weiter unten noch näher beschrieben werden, aufzunehmen. Auch eine andere Anzahl und/oder Adressierung der zusätzlichen Header-Fields ist möglich.

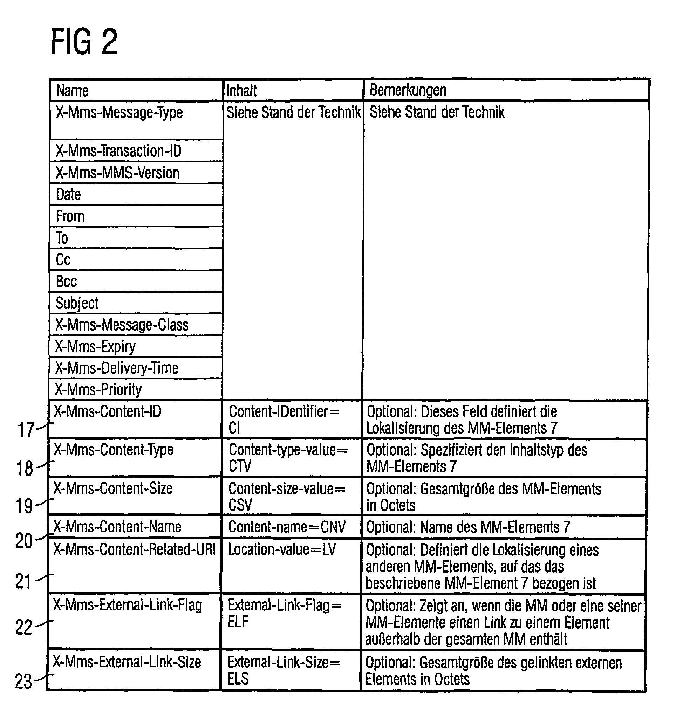

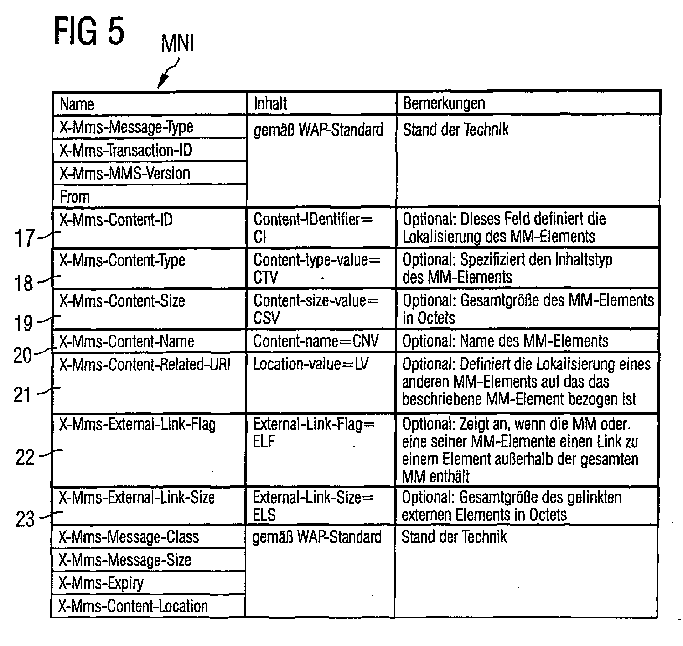

Die zusätzlichen genannten Header-Fields 17, 18, 19, 20, 21, 22, 23 sind zumindest in der Nachricht 11 (M-Notification.ind), mit der der Empfänger 4 über das Bereitstehen einer MM informiert wird, beigefügt. Auch die Nachricht 9 (M-Send.req) kann, wenn die zusätzlichen Parameter vom Versender 2 generiert werden, die zusätzlichen Header-Fields 17, 18, 19, 20, 21, 22, 23 enthalten (Fig. 2), ebenso die eigentliche MM-Zustellung 14 (M-Retrieve.conf) (sh. Fig. 5) oder weitere der Nachrichten 10, 12, 13, 15, 16.

Unter einem Datensatz 7 einer MM wird im folgenden ein einzelner Bestandteil einer MM verstanden, der durch seinen Typ (z.B. Standbild) und sein Format (z.B. JPEG) definiert ist, wobei im MMS auch eine Formatkonvertierung durch das MMS Relay 3 vorgesehen ist, durch die gewährleistet wird, daß auch Telekommunikationsgeräte 6 eines Empfängers 4, die nur bestimmte Formate eines Typs unterstützen, auch nur mit diesen Formaten bedient werden. Beispielsweise kann ein Telekommunikationsgerät 6 nur Standbilder im JPEG-Format anzeigen, was es im Rahmen seiner Anmeldung dem MMS Relay 3 mitgeteilt hat. Das MMS Relay 3 konvertiert dann alle für diesen Empfänger eingehenden Standbilder in das JPEG-Format, wodurch sich im allgemeinen die Dateigröße ändert. Dieser Aspekt ist für eine spätere Betrachtung der nach dieser Erfindung neuen Header-Felder relevant.

Als Identifikationssignal können beispielsweise die folgenden Informationen über einen Datensatz 7 enthalten sein. Auch eine andere Anzahl von Informationen, etwa nur eine Auswahl aus den aufgeführten, kann vorgesehen sein. Die Informationen werden dem Empfänger einer MM optional bei Verwendung des WAP-Standards (Fig. 1) in der Benachrichtigung 11 (M-Notification.ind), und damit vor Übertragung der eigentlichen Daten in der Multimedia message, zur Verfügung gestellt.

Mögliche Parameter von zu übertragenden Daten, insbesondere einer MM, über die der Empfänger vorab informiert wird, sind:
1. die Anzahl der enthaltenen Datensätze 7 der MM (auch implizit durch die Beschreibung der einzelnen Elemente der MM),
2. die jeweilige Größe (in Octets) eines Datensatzes 7,
3. der jeweilige Typ und das Format eines Datensatzes 7,
4. die jeweilige Content ID (Content IDentification) eines Datensatzes eventuell auch relativ zu der Content ID/Message ID der gesamten MM,
5. der jeweilige Name eines Datensatzes,
6. das Subjet der gesamten MM,
7. die Verbindung eines Elements zu einem oder mehreren anderen Datensätzen 7 der MM,
8. die Verbindung der gesamten MM oder eines/mehrerer Datensätze 7 zu einer oder mehreren URLs/URIs außerhalb der MM und bei einem solchen externen Link optional die Größe der zu ladenden Daten des/der aufgelösten externen Links.

Mit Hilfe der neuen Header-Felder 17, 18, 19, 20, 21, 22, 23 kann die Methode der "detailed Notification" im MMS umgesetzt und der Komfort des MMS für den Benutzer deutlich erhöht werden. Schon vor dem Laden einer MM und damit voraussichtlich schon bevor Kosten für den Benutzer entstehen, wird dieser über die Inhalte und die Zusammensetzung der MM detailliert informiert und kann entsprechend handeln, etwa dadurch, daß er nur einzelne Datensätze 7 der MM herunterlädt und weitere ablehnt.

Eine MM besteht grundsätzlich aus einem Header und abhängig vom Typ der MM zusätzlich aus einem Datenteil (WAP: Body). Der Header umfaßt allgemeine Informationen der MM und setzt sich aus definierten Header-Feldern zusammen. Der Datenteil der Message enthält ein oder mehrere Elemente beliebigen Typs (z. B. Texte, Bilder, Töne...), die in beliebiger Reihenfolge dem Header folgen. Falls eine Präsentationsbeschreibung im Datenteil enthalten ist, soll in einer WAP-Message zu Beginn des Datenteils ein sogenannter Start-Parameter auf diese Präsentationsbeschreibung hinweisen.
Jedes Header-Feld besteht aus einem Feld-Namen, gefolgt von einem Feld-Wert, der aus mindestens einem Octet besteht. Die Zuweisung von hexadezimalen Werten zu den Feld-Namen ist in Fig. 4 aufgeführt.

Um die Benachrichtigung 11 an den Empfänger 4 mit den gewünschten Informationen anzureichern, bestehen grundsätzlich zwei Möglichkeiten: Entweder werden die Informationen vom Provider 3 oder vom Versender 2 erstellt. Auch eine Mischform ist möglich. Im einzelnen sind hierfür die folgenden Abläufe möglich:

Die Informationen werden aus der am MMS Relay 3 mit der Nachricht 9 eintreffenden MM extrahiert, d.h. teilweise aus Header-Feldern unverändert übernommen und teilweise aus dem Datenteil der.MM berechnet (z.B. die Angabe der Größe eines Datensatzes 7).

Vorteilhaft bei diesem Vorgehen ist die zu erwartende Konsistenz zwischen den beschreibenden Header-Informationen der Nachricht 11 und den tatsächlichen Inhalten 14 (in WAP: M-Retrieve.conf), die auf Anforderung des Empfängers 4 (User Agent B) an diesen übertragen werden. Der Realisierungsaufwand beim Versender 2, und damit i.d.R. im mobilen Endgerät, bleibt gering. Ein weiterer Vorteil besteht hinsichtlich der Genauigkeit der Größenangabe, wenn Formatkonvertierung stattfindet. Bei MMS ist vorgesehen, daß vor Auslieferung der Daten eine Anpassung des Inhalts an z.B. Fähigkeiten des empfangenden MMS User Agents 4 (wie unterstützte Codecs, Display-Größe des Endgeräts etc.) oder Vorlieben des Empfängers (wie automatische Beschränkung auf eine maximale Größe) durch den Service Provider 3 stattfinden kann. Das MMS Relay 3 kann dem Empfänger 4 die Größe des Inhalts nach Datenanpassung mitteilen. Dies ist eine Information, die der Versender 2 nicht besitzt. Nachteilig ist der beim MMS-Relay 3 zusätzliche Aufwand zur Generierung der Informationen für diese "detailed Notification", der durch das notwendige "Parsen" der MM und die Extraktion der entsprechenden Informationen entsteht.

Die Informationen können statt dessen bereits vom Versender 2 generiert und als Header-Felder 17;18;19;20;21;22;23 in die Nachricht 9 zum Versenden einer MM (in WAP: M-Send.req) explizit integriert werden. Vorteilhaft ist die unveränderte Verarbeitung der MM im MMS Relay 3, das nicht den Inhalt der MM analysieren muß. Die Realisierung der mit den neuen Header-Feldern 17;18;19;20;21;22;23 eröffneten Möglichkeiten im Terminal 5 kann vom Hersteller bestimmt werden. Es besteht darüber hinaus die Möglichkeit, Endgeräte mit unterschiedlichen Komfortmerkmalen anzubieten. Weiterhin kann der MMsendende Teilnehmer 2 sein Wissen über die interne und externe Verknüpfung der MM-Elemente dem MM-Empfänger in Form von detaillierten Informationen mitteilen, welche vom MMS-Relay 3 lediglich weitergeleitet werden. Eine Generierung der Header-Felder im MMS Relay 3, die Wissen über die interne und externe Verknüpfung der Datensätze 7 erfordert, wäre dort nur durch aufwendiges Parsen der MM möglich. Nachteilig ist die Erweiterung von Header-Feldern mit teilweise redundanten Informationen.

Vorteilhaft werden die Informationen daher teilweise im sendenden User Agent 2 und teilweise im MMS Relay 3 generiert, was auf Seiten des MMS Relay 3 auch die Aktualisierung bereits vorhandener, vom Versender 2 generierter Header-Felder erfordert.

Für diese Mischform der Generierung zusätzlicher Informationen kann folgende Aufteilung der im folgenden erklärten Informationen vorgesehen sein:
Generierung im sendenden User Agent 2:
   - X-Mms-Content-ID: In der bisherigen WAP-Spezifikation fehlen die Möglichkeiten, den Datensätzen 7 eigene zusätzliche Header-Felder zuzuordnen (z.B. mit jeweiligem Namen und Typ) und mehrere Datensätze 7 hierarchisch anzuordnen. Für eine transparente Konvertierung einer MM in eine Internet-Mail (Format gemäß RFC 822 mit Erweiterungen gemäß MIME (Multipurpose Internet Mail Extensions)) werden daher die hier folgenden Voraussetzungen vorgeschlagen: Die zu jeder Extension einer E-Mail möglicherweise zusätzlich im Datenteil der E-Mail codierten Informationen (Name, Typ, ...) sind transparent auch in einer MM enthalten. Eine Content-ID im Header der MM, die jedem Datensatz 7 eindeutig zugeordnet ist, kann als Verweis genutzt werden. Der Start-Parameter im Message-Body (= Datenstrukturabschnitt, der eigentliche Mitteilungsinformation(en) enthält) muß als Feld definiert sein, das die Content-ID (= Inhaltsidentifikator) CI des Präsentationsbeschreibungsobjektes enthält und damit den Zugriff auf dieses Objekt ermöglicht. Mit diesen Vereinbarungen ist eine transparente Übertragung einer MM von einem MMS-Relay zu einem beliebigen Empfänger sowohl direkt über ein anderes MMS-Relay als auch über das Internet per E-Mail möglich. Eine eindeutige Zuordnung zu dem Datensatz oder den Datensätzen 7 in der MM ist unbedingt für die erste Übertragung vom sendenden User Agent 2 zum MMS Relay 3 erforderlich.
   - X-Mms-Content-Type: bezeichnet den Typ und das Format des Datensatzes 7. Diese sollten bereits beim Versenden eingetragen werden, da der Datensatz 7 nicht unbedingt einen Dateinamen wie in einer E-Mail erhält und dann nicht über die Dateierweiterung (Extension) einem Format zugeordnet werden kann. Eine Aktualisierung dieses Feldes durch das MMS Relay 3 ist nur bei einer Format- und/oder Typkonvertierung erforderlich. Der X-Mms-Content-Type wird durch den Wert oder das Signal CTV angezeigt und bestimmt.
   - X-Mms-content-Size: Größe des Datensatzes 7. Dieser wird durch Wert bzw. Inhalt CSV angezeigt und bestimmt.
   - X-Mms-Content-Name: Name des Datensatzes 7. Dieser Name ist nur dem sendenden User Agent 2 bekannt und muß daher von ihm eingesetzt werden. Ihm ist der Inhalt CNV zugeordnet.
   - X-Mms-External-Link-Flag: Zeigt an, daß der Datensatz 7 eine Verknüpfung auf Inhalte außerhalb der MM enthält. Wenn diese Information vom sendenden User Agent 2 eingesetzt wird, ist eine Inhaltsanalyse des Datensatzes 7 durch das MMS Relay 3 entbehrlich. Ihm ist inhaltlich der Wert oder die Zeichenfolge ELF zugeordnet.
   - X-Mms-External-Link-Size: Damit wird die Größe eines verknüpften Inhalts außerhalb der MM angegeben. Dies wird durch den Inhalt ELS angezeigt. Da der Datenumfang eines externen Inhalts nicht an der Verknüpfung selbst abzulesen ist, ist diese Information für einen Nutzer von großem Interesse. Sie kann direkt bei der Generierung der MM im sendenden MMS User Agent 2 erzeugt werden. Alternativ ist eine Generierung durch das MMS-Relay 3 möglich, erfordert jedoch neben der Analyse der gesamten MM auch den Zugriff auf in Referenz angeführte Objekt zwecks Größenbestimmung.
   - X-Mms-Content-Related-URI: Die Information CRV dieses Feldes zeigt den Ort eines anderen Elements, auf das der Datensatz 7 Bezug nimmt, an. Beispielsweise enthält ein Datensatz 7 eine Präsentationsbeschreibung, die sich auf andere Elemente mit Audio-, Video- oder anderen Inhalten der MM bezieht. Die Generierung dieser Informationen erfordert einerseits Wissen über die internen Bezüge der Elemente einer MM, das auf Seiten des sendenden MMS User Agents 2 vorhanden ist, und andererseits Wissen bezüglich der Positionen der MM-Elemente beim MMS-Relay/Server 3 bzw. beim Empfänger 4. Die Informationen können auf Seiten des sendenden MMS User Agents 2 in Header-Feldern codiert werden und sind durch das MMS-Relay 3 auf Basis der dann aktuellen Positionen zu korrigieren/aktualisieren und anschließend im empfangenden MMS User Agent 4 auszuwerten.
Generierung bzw. Aktualisierung im MMS Relay 3:
   - X-Mms-Content-ID: Wird bei Veränderungen Content-ID durch das MMS Relay angepaßt.
   - X-Mms-Content-Type: Falls das MMS Relay 3 den Typ und/oder das Format eines Datensatzes 7 ändert, erfolgt die entsprechende Aktualisierung des Content-Type.
   - X-Mms-Cöntent-Size: Größe des Datensatzes 7, angegeben in Octets. Nur falls das MMS Relay 3 Typ und/öder Format des Datensatzes ändert, erfolgt eine Aktualisierung der die Content-Size betreffenden Information.

Mit den differenzierten Informationen, die ein Benutzer 4 mit der Nachricht 11 (WAP: M-Notification.ind) erhalten hat, ist über den beispielsweise softwareseitig in einem Menü implementierten und über ein Eingabemittel, etwa eine Tastatur, zu bedienenden Auswahlschalter 25 ein Zugriff auch auf einzelne Datensätze 7 möglich. So kann ein partielles Download durch eine Downloadanforderung mit der Content-ID eines jeweils gewünschten Datensatzes 7 (beispielsweise eines Fotos ohne gleichzeitige Mitübertragung des Begleittextes) in WAP mit dem Befehl 13: WSP GET.req veranlaßt werden.

Um dieses zu ermöglichen, muß das grundsätzliche Problem gelöst werden, daß die zusätzlichen Header-Felder teilweise in einer MM mehrfach verwendet werden müssen (WAP: z.B. X-Mms-Content-Name für jeden Datensatz 7 der MM). Stehen mehrere Header-Felder in einem inhaltlichen Zusammenhang, was bei der Beschreibung eines Datensatzes der Fall ist, muß auch eine syntaktische Zuordnung definiert sein.

Grundsätzlich ist im WAP-Standard die Reihenfolge der HeaderFelder unerheblich. Eine Veränderung der Reihenfolge der Informationen Name, Größe, Typ und/oder URI mehrerer Datensätze 7 würde damit eine Veränderung bzw. Verfälschung der Beschreibungen der Datensätze 7 bewirken, wenn man die Zuordnung der Informationen von der Reihenfolge der Header-Elemente abhängig machte, was der einzig gangbare Weg ist, da eine hierarchische Struktur der Header-Elemente in WAP nicht vorgesehen ist.
Andererseits steht die Aussage der Irrelevanz der Header-Element-Reihenfolge im Widerspruch zu der Aussage, daß HTTP-Header, die Listen enthalten, in mehrere WSP-Header mit jeweils nur einem einzigen Element umgewandelt werden sollen, wobei die Reihenfolge der Einträge erhalten bleiben soll. Um diesen Widerspruch aufzulösen, wird eine Systematik entworfen, die die Signifikanz der Reihenfolge der Header-Elemente voraussetzt.

Zur Abgrenzung der Beschreibungen einzelner Datensätze 7 muß ein definiertes Header-Feld die Beschreibung eines Datensatzes 7 beginnen, der alle nachfolgenden Header-Felder zugeordnet werden, bis entweder das Ende des Headers der Message erreicht ist oder ein nächstes Header-Feld des definierten Typs den Beginn der Beschreibung eines weiteren Datensatzes 7 markiert.

Als definiertes Header-Feld für die Beschreibung eines Datensatzes 7 dient das Feld 17: X-Mms-Content-ID, da es die eindeutige Adresse des Elements enthält. Die Beschreibung eines Datensatzes 7 wird grundsätzlich durch dieses Feld eingeleitet, worauf die weiteren Felder optional und in beliebiger Reihenfolge erscheinen können.

Alternativ zu der Systematik mit eindeutigen Marken für die Message-Elemente - den Content-IDs - und den entsprechenden Verweisen im Header ist auch eine Systematik möglich, die mit der Angabe eines Offsets bis zu dem beschriebene Datensatz im Datenteil der MM arbeitet. Nachteilig sind dabei allerdings zum einen die Gefahr, den Offset nicht korrekt zu berechnen bzw. bei einer möglichen Formatkonvertierung im MMS Relay 3 nicht korrekt anzupassen, und zum anderen die fehlende Möglichkeit, eine logische Beziehung zwischen einer Beschreibung eines Datensatzes 7 in der Benachrichtigung 11 und in der tatsächlichen Übersendung 14 der MM herzustellen. Die Informationen müßten dann in der zugestellten Multimedia Message noch einmal enthalten sein.

Der Versender (Ebene 2) kann an seinem Telekommunikationsgerät 5 eine hardwareseitig oder insbesondere softwareseitig und über die ohnehin vorhandene Tastatur zu bedienende Eingabemöglichkeit betätigen, um damit in den Header-Feldern 17, 18, 19, 20, 21, 22, 23 die zusätzlichen Informationen oder einen Teil dieser Informationen (s.o.) zu hinterlegen. Diese werden als Bestandteil eines Identifizierungssignals für einen oder mehrere Datensätze 7 der MM mit der Sendung 9 (in WAP: M-Send.req) (Fig. 1) an den Provider (Ebene 3) gesandt. Die Bestätigung des Versands durch das MMS-Relay 3 (in WAP mit der Nachricht 10: M-Send.conf) bleibt unverändert, da die einzige wesentliche Information die optional vom MMS-Relay 3 vergebene Message-ID ist.

Der Empfänger 4 erhält dann die Nachricht 11 (in WAP M-Notification.ind), daß für ihn eine MM mit einem oder mehreren Datensätzen 7 zum Herunterladen bereitliegt. Diese Benachrichtigung 11 enthält wiederum alle zusätzlichen HeaderFelder 17, 18, 19, 20, 21, 22, 23 zur Beschreibung der Datensätze 7 aus dem Header der Nachricht 9 zu ihrem Versenden (in WAP: M-Send.req). Diese Information kann dem Empfänger optisch (über das Anzeigemittel 24, beispielsweise das Display) oder akustisch mitgeteilt werden.

Die Bestätigung 12 (WAP: M-NotifyResp.ind) des Empfangs der Notification 11 bleibt unverändert.
Nachdem der Empfänger 4 der MM detailliert über deren Inhalt informiert ist, kann er die gesamte MM (in WAP: durch das Kommando 13: WSP Get.req) herunterladen. Alternativ ist nach dieser Erfindung auch ein Zugriff auf ein einzelnes Element der MM möglich. Hierzu wird beispielweise als URI die Content-ID eines Datensatzes 7 der MM in das Kommando zum Download eingesetzt. Ohne Zustimmung des Empfängers 4 wird ein Herunterladen der MM (Übersendung der Sendung 14 an den Empfänger) nicht freigegeben. Auch ist es möglich, daß der Empfänger 4 die MM erst zu einem späteren, billigeren Zeitpunkt übermittelt bekommen will.

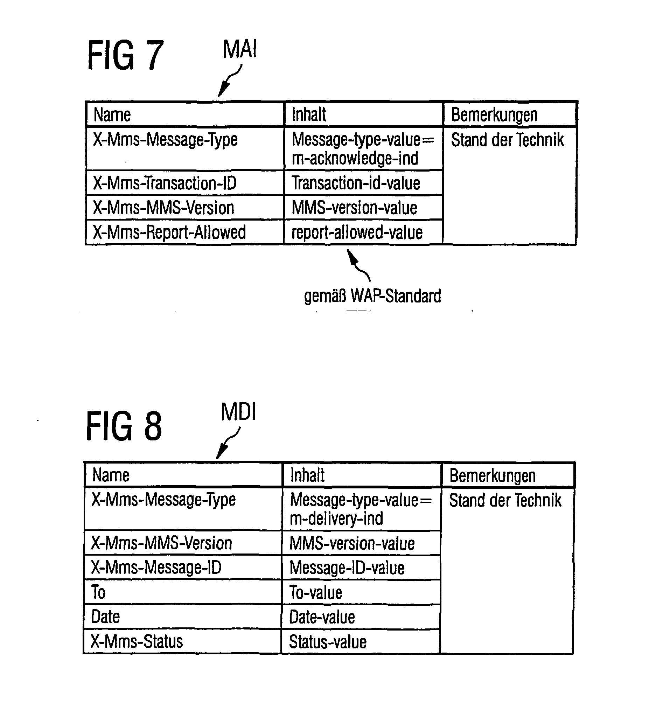

Die eigentliche Datensendung 14 kann die beschreibenden Header-Felder 17, 18, 19, 20, 21, 22, 23 enthalten. Dies ist jedoch nicht zwingend , wie in Fig. 7 dargestellt.

Schließlich schickt das MMS-Relay 3, wenn vom Versender 2 gewünscht, eine Mitteilung 16 über den Status der Zustellung der MM (in WAP: M-Delivery.ind) an diesen. Neben den bisher schon bekannten Möglichkeiten "Expired" (verfallen), "Retrieved" (zugestellt), "Rejected" (abgelehnt), "Deffered" (verzögert)" kann erfindungsgemäß auch "Partly-retrieved" (partiell zugestellt) im Statusfeld auftreten. Es wird angezeigt, welcher Datensatz 7 zugestellt wurde. Der entsprechende Abschnitt der Nachricht 16 könnte wie folgt lauten:
>>>>>
7.2.22 Status field (Status-Feld)
Status-value = Expired | Retrieved | Rejected | Deferred | Partly-retrieved
Expired = <Octet 128>
Retrieved = <Octet 129>
Rejected = <Octet 130>
Deferred = <Octet 131 >
Partly-retrieved = <Octet 132>
<<<<<
Die ebenfalls neuen Felder 22, 23
X-Mms-External-Link-Flag (optional) und
X-Mms-External-Link-Size (optional)
können in den Nachrichten 9 zum Versand der MM (WAP: M-Send.req) und in der Nachricht 11 an den Empfänger 4 (WAP: M-Notification.ind) die im Inhalt der MM enthaltenen Links auf Inhalte außerhalb der MM anzeigen. Je nach Position im MM Header zeigt das Feld 22: X-Mms-External-Link-Flag einen Link auf externe Inhalte innerhalb der gesamten MM oder innerhalb eines bestimmten Datensatzes 7 der MM an. Das Feld 23: X-Mms-External-Link-Size beschreibt optional die Größe des Inhalts in Octets. Damit kann der Empfänger der Notification bereits abschätzen, welches zusätzliche Datenvolumen zu dem der MM selbst noch herunterzuladen ist.

Das vorgestellte Verfahren kann in eine Software zum Betreiben des jeweiligen Kommunikationsstandards, etwa UMTS, integriert sein. Die Telekommunikationsgeräte 5,6 sind dann mit einer entsprechenden Software versehen.

Im folgenden ist ein konkreter Ablauf der erfindungsgemäßen Übermittlung einer MM nach dem WAP-Standard (Fig. 1) dargestellt:
Es wird beispielhaft folgendes Szenario angenommen: Versender 2 (Markus Trauberg) verschickt eine MM mit einem Text mit mehreren Datensätzen 7, nämlich einem MP3-Audio, einem JPEG-Bild, einem MPEG-4-Video und einer SMIL-Präsentationsbeschreibung, an zwei Empfänger 4 (Andreas Schmidt und Josef Laumen). Zur komfortablen und differenzierten Nutzung durch die Empfänger 4 fügt er Beschreibungen von Parametern der Datensätze 7 der MM ihrem Header bei. Die Daten werden in den Nachrichten 9 (M-Send.req) und 11 (M-Notification.ind) an die Empfänger übertragen. Empfänger 4 Andreas Schmidt lädt die komplette MM auf sein Endgerät 6, während Empfänger 4 Josef Laumen nur an dem Text interessiert ist und nur diesen auf sein Endgerät 6 lädt. Die folgenden MMs werden zwischen den Einheiten übertragen:

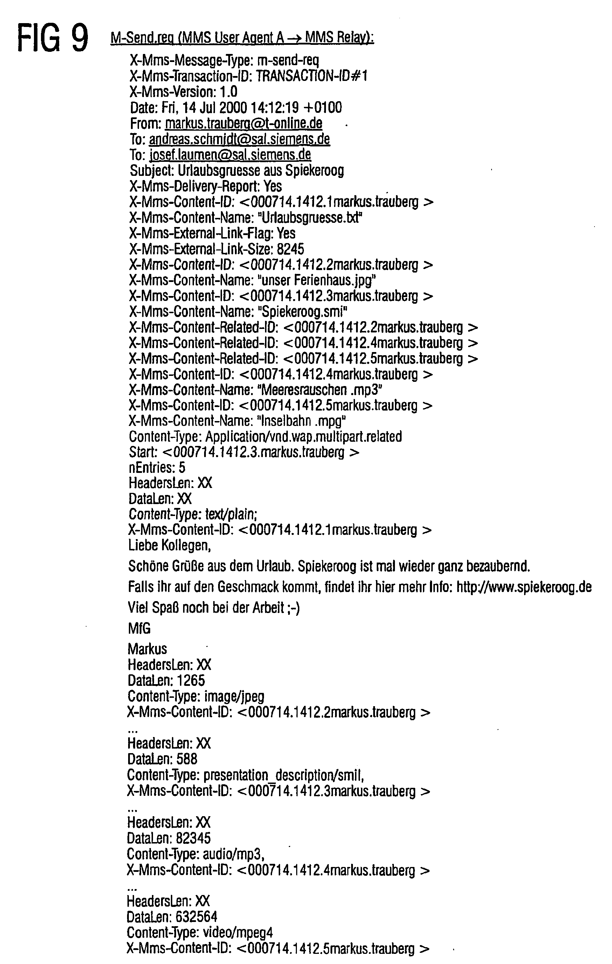

MM wird an zwei Adressaten verschickt. Dann kann das Nachrichtenprotokoll wie in Figur 9 abgebildet sein.

In der MM sind im Header die zusätzlichen Informationsblöcke über die MM-Elemente codiert. Darin werden auch die Beziehungen zwischen den Datensätzen 7 der MM beschrieben: So enthält die Beschreibung der presentation_description Verweise auf die darin externen Elemente image/jpeg, audio/mp3 und video/mpeg4 in Form der entsprechenden Content-IDs.
Die Beschreibung des Textes enthält die Information, daß ein Verweis auf ein externes Objekt enthalten ist, das 8245 Byte Daten umfaßt.

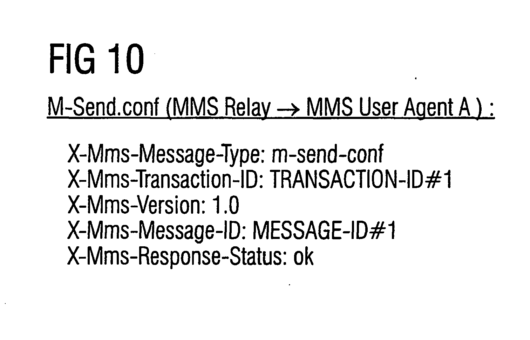

Die Quittierung der oben aufgeführten Sendeanfrage 9 (M-Send.req) des Versenders 2 erfolgt mit der Nachricht 10 (M-Send.conf) vom MMS Relay 3. Diese Nachricht 10 enthält keine zusätzlichen neuen Felder, wie an ihrer folgenden Aufstellung sichtbar ist, die in Figur 10 abgebildet ist.

Das MMS Relay 3 bestätigt mit Nachricht 10, daß die Anfrage 9 fehlerfrei zum MMS Relay 3 übertragen worden ist. Es wird die Transaction-ID#1 benutzt, um die Nachricht 10 beim Versender 2 eindeutig der dazugehörigen Anfrage 9 (M-Send.req) und damit der gesendeten MM zuzuordnen. Weil in der Nachricht 9 in dem Feld X-Mms-Delivery-Report ein Zustellungsreport angefordert wurde, weist das MMS Relay 3 der MM eine Message-ID zu und übermittelt diese hier an den Versender 2.

Im weiteren wird die Nachricht 11 an die Empfänger 4 übertragen:

### M-Notification.ind (MMS Relay → MMS User Agent B):

Im MMS ist vorgesehen, einen Empfänger einer MM über neue Nachrichten, die für ihn vorliegen, zu informieren. Die Nachricht 11 (M-Notification.ind) dient der Benachrichtigung der Adressaten über zum Download bereitliegende MM. Folglich existieren in diesem Beispiel zwei Benachrichtigungen an die Empfänger Andreas Schmidt und Josef Laumen. Jede enthält eine eigene Transaction-ID. Die Information über den Speicherplatz der MM steht bei beiden in dem Feld X-Mms-Content-Location.

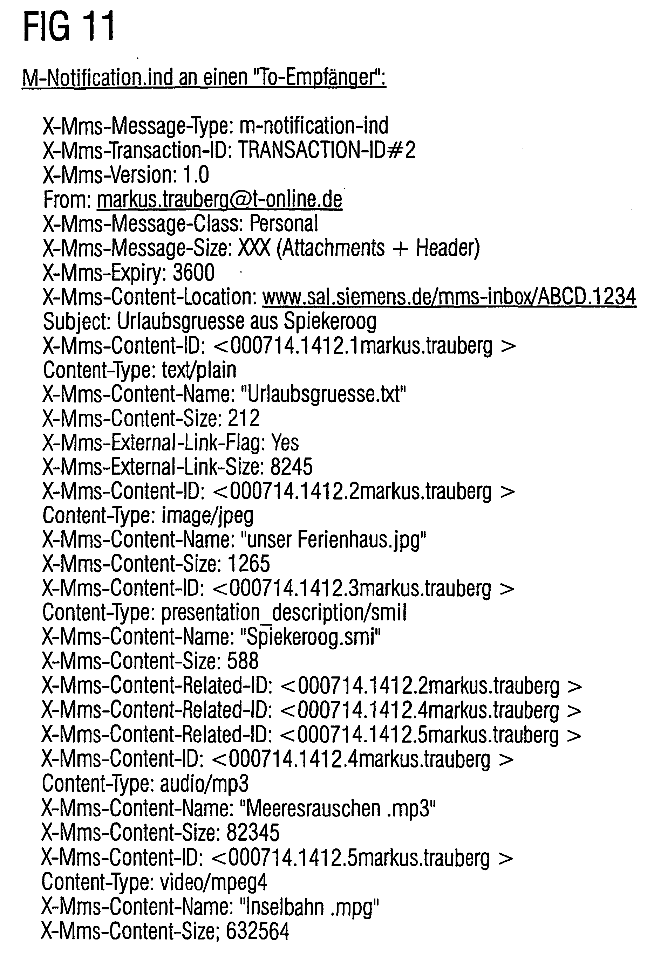

Figur 11 gibt den Inhalt der M-Notification-ind exemplarisch wieder.

Neben den üblichen Feldern zu Beginn der Nachricht 11 können nun alle beschreibenden Elemente der Nachricht 9 in die Nachricht 11 übernommen werden. Zusätzlich werden, wie oben anhand der Mischform beschrieben, durch das MMS Relay 3 noch die Informationen X-Mms-Content-Type und X-Mms-Content-Size aus den Informationen des Body der Nachricht 9 generiert. Der Empfänger 4 kennt nach Erhalt der Nachricht 11 sowohl die Adresse der MM (wie bisher) als auch die Zusammensetzung aus den einzelnen Datensätzen 7 und deren Content-IDs. Ein Zugriff ist daher auch separat auf einzelne Datensätze 7 der MM möglich.

Der korrekte Empfang der Benachrichtigung wird anschließend von dem Empfänger 4 der MM mit der Nachricht 12 (M-NotifyResp.ind) bestätigt, indem die entsprechende Transaction-ID der Nachricht 11 zusammen mit einer Statusmeldung zurück zum MMS Relay 3 geschickt wird.

Der Download der MM wird durch das Kommando 13 (WSP GET.req) veranlaßt. Die MM wird darauf vom MMS Relay 3 in der Nachricht 14 (M-Retrieve.conf) zum Empfänger 4 gesendet.

Da die Informationen über die einzelnen Elemente bereits mit der Nachricht 11 übertragen wurden, kann der Download der gesamten MM wie bisher mit der Nachricht 14 erfolgen, ohne daß zusätzliche Felder im Header dieser Nachricht 14 eingefügt werden müssen. Die zusätzlichen Informationen in den Headern der einzelnen Datensätze 7 hingegen sollten auch in der Nachricht 14 enthalten sein, da sie wichtige Informationen über die MM-Datensätze 7 enthalten.

Im folgenden sind zwei mögliche Reaktionen der Empfänger 4 beispielhaft dargestellt:
Empfänger Andreas Schmidt lädt die gesamte MM.
Empfänger Josef Laumen lädt nur den Textteil der MM auf sein Empfangsgerät 6.

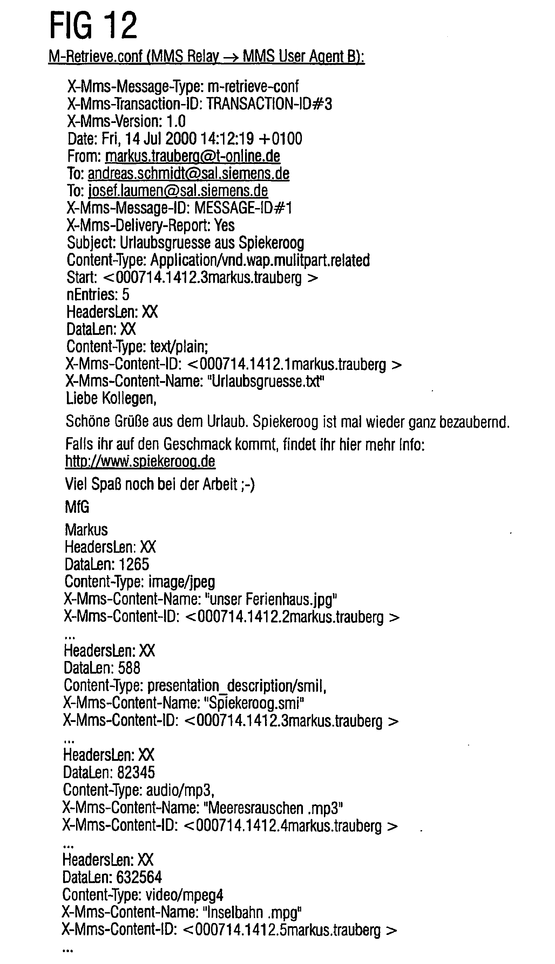

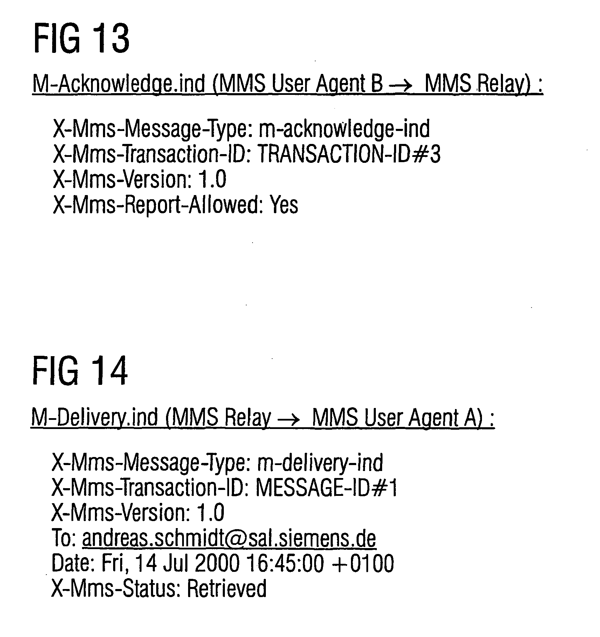

Im ersten Fall wird die Nachricht 14 wie in Figur 12 abgebildet codiert:
Der Empfänger 4 Andreas Schmidt quittiert den erfolgreichen Empfang der MM anschließend Nachricht 15 (M-Acknowledge.ind). Mit der darin enthaltenen Transaction-ID ist am MMS Relay 3 die Zuordnung zu der gesendeten MM entsprechend dem Informationssignal M-Acknowledge.ind von Figur 13 möglich.

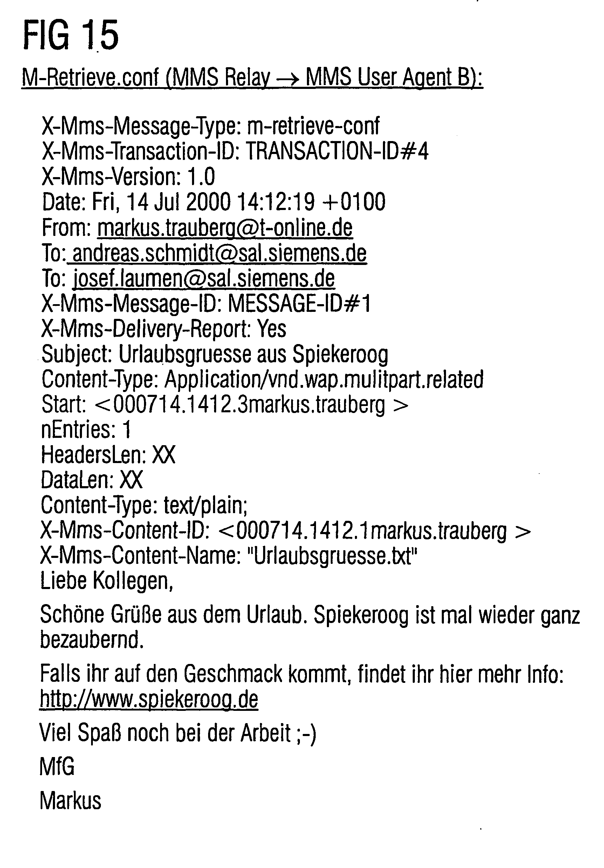

Als letzter Schritt der Transaktion wird schließlich die Nachricht 16 (M-Delivery.ind) entsprechend Figur 14 vom MMS Relay 3 an den Versender 2 übermittelt:
Der zweite Empfänger Josef Laumen hingegen entscheidet sich dafür, nur den Textteil der Nachricht 14 zu laden. Dazu setzt er in die Nachricht 13 (WSP GET.req) die Content-ID des Textteils ein: "000714.1412.1markus.trauberg". Er erhält diesen Textteil mit der Nachricht 14 (M-Retrieve.conf), die gegenüber der Version an Andreas Schmidt deutlich verändert ist und deren Inhalt in Figur 15 exemplarisch wiedergegeben ist.

Die Nachricht 14 wurde gegenüber ihrer kompletten Version, wie sie an Andreas Schmidt geschickt wurde, um die nichterwünschten Datensätze 7 reduziert. Außerdem wurde das Feld nEntries entsprechend angepaßt.

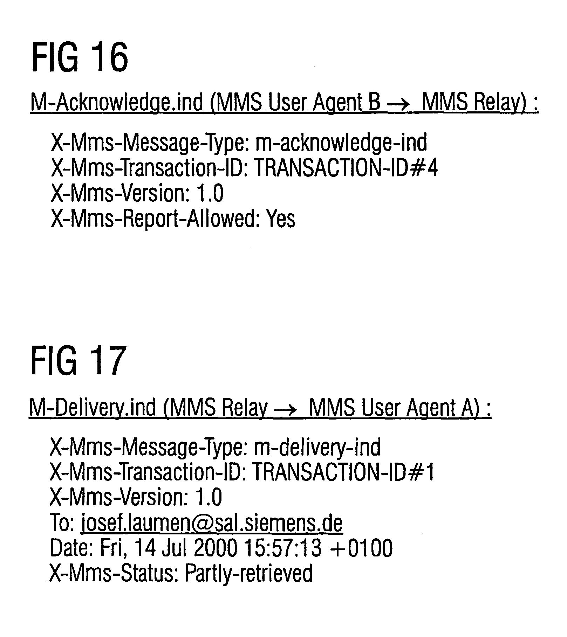

Die Nachricht 15 (M-Acknowledge.ind), die in Figur 16 dargestellt ist, entspricht fast komplett der Version an Andreas Schmidt, enthält aber eine eigene Transaction-ID:
Als letzter Schritt erfolgt wieder die Benachrichtigung des Versenders 2 über den Status der Zustellung. Sie enthält den Status der partiellen Zustellung ("Partly-retrieved") und ist inhaltlich in Figur 17 dargestellt.

Neben den vorstehend beschriebenen Möglichkeiten zur detaillierten Benachrichtigung von Empfängern von Multimedia Nachrichten (MMs) im Multimedia Messaging Service (MMS) besteht eine weitere, zweckmäßige Option, die Vorteile gegenüber den bereits vorgestellten Varianten hat. Diese vorteilhafte Option wird nachfolgend beschrieben.

Kern dieser Modifikation ist die Realisierung der Idee, den jeweiligen Empfänger detailliert über den Inhalt der jeweiligen MM zu informieren, wobei lediglich ein einziges, neu definiertes Header-Feld genutzt wird, für das neue Parameter eingeführt werden. Das neue Header-Feld enthält dabei alle Parameter, d.h. Informationen über ein zu beschreibendes Element der MM. Unter Element bzw. Datensatz einer MM wird in dieser Erfindungsmeldung ein einzelner Bestandteil einer MM verstanden, der insbesondere durch seinen Typ (z.B. Standbild) und sein Format (z.B. JPEG (= joint photographics expert group)) definiert ist.

Die folgende Liste enthält die bereits zu den vorausgehenden Varianten vorgeschlagenen Informationen, die dem Empfänger einer MM optional in einer Empfängerbenachrichtigung im MMS (M-Nind; in WAP: *M-Notification.ind*) zur Verfügung gestellt werden können. Dazu gehören:
- die Anzahl der enthaltenen Elemente der MM (auch implizit durch die Beschreibung der einzelnen Elemente der MM),
- die Größe (in Octets) eines Elements,
- der Typ und das Format eines Elements,
- die Content ID (Content IDentification) eines Elements (= Name bzw. Bezeichner des jeweiligen Headerfeldes des jeweiligen Identifikationssignals),
- der Name eines Elements,
- die Verbindung eines Elements zu einem oder mehreren anderen Elementen der MM,
- die Verbindung der gesamten MM oder eines/mehrerer Elemente zu einer oder mehreren URLs/URIs (uniform resource link/identifier) außerhalb der MM und bei einem solchen externen Bezug optional die Größe der zu ladenden Objekte des/der aufgelösten externen Bezüge.

Die Definition der entsprechenden Header-Felder zur optionalen Erweiterung der MMS Empfängerbenachrichtigung (M-Nind; in WAP: *M-Notification.ind)* und gegebenenfalls auch der MMS Sendeanfrage (M-Sreq; in WAP: *M-Send.req*) und der MMS-Zustellnachricht (M-Rconf; in WAP: *M-Retrieve.conf*) sind im beim nachfolgenden Ausführungsbeispiel beschrieben.

Eine MM besteht grundsätzlich - wie in den vorausgehenden Ausführungsbeispielen aufgezeigt - aus einem Header und abhängig vom Typ der Nachricht ggf. zusätzlich aus einem Datenteil (WAP: Body). Der Header umfasst allgemeine Informationen der Nachricht und setzt sich aus ein oder mehreren, definierten Header-Feldern zusammen. Der etwaige Datenteil der Message enthält ein oder mehrere Elemente beliebigen Typs, die in beliebiger Reihenfolge dem Header folgen. Falls eine Präsentationsbeschreibung im Datenteil enthalten ist, soll z.B. in einer WAP-Nachricht zu Beginn des Datenteils ein so genannter Start-Parameter auf diese Präsentationsbeschreibung zweckmä-βigerweise hinweisen.

Figur 1 zeigt dabei in einem Nachrichtenflussdiagram den prinzipiellen Ablauf einer Nachrichtenübermittlung von der Nutzerapplikation des sendenden Nutzers 2 (User Agent A = M-UA_A) über die MMS Verbindungseinheit 3 (MMS Relay=M-SR) zur Nutzerapplikation des empfangenden Nutzers 4 (User Agent B =(M-UA_B)).

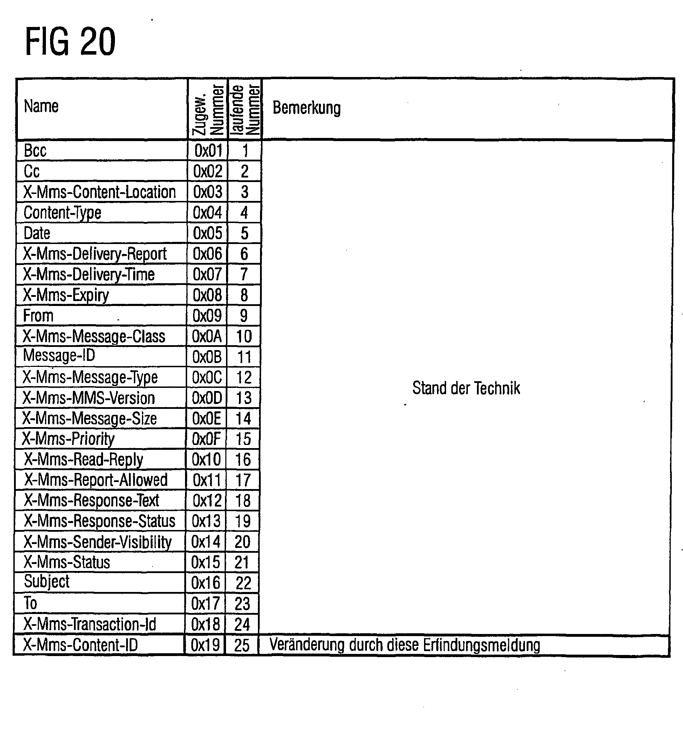

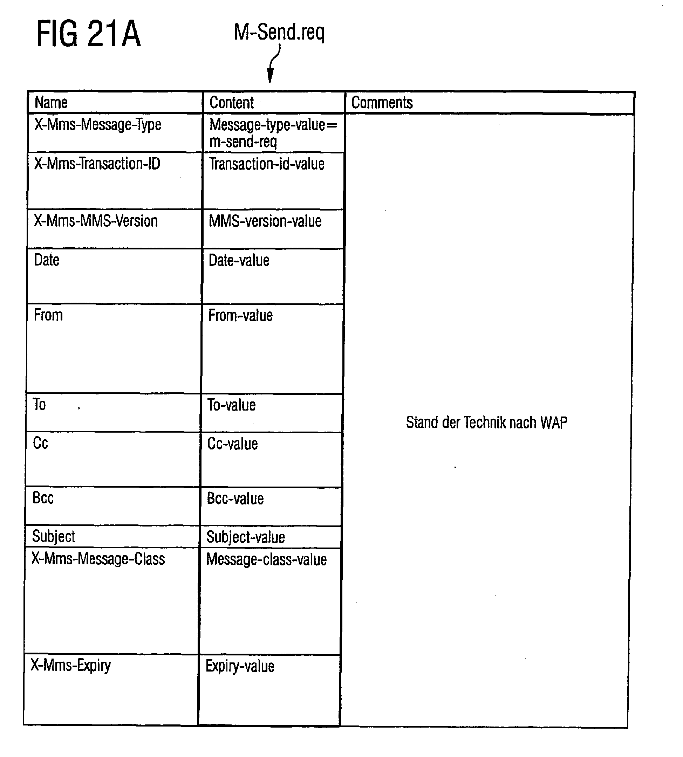

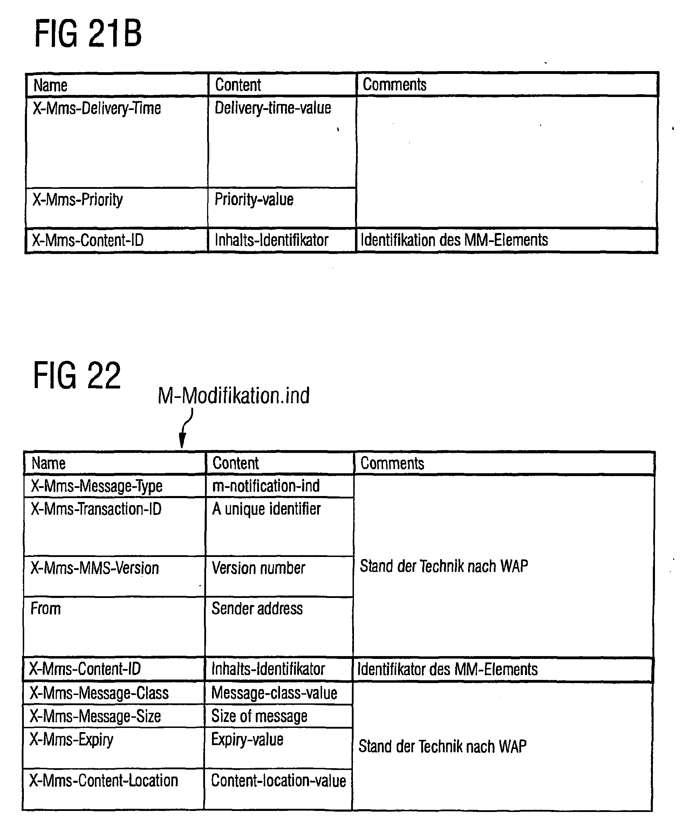

Die je nach Nachrichten-Typ möglichen bzw. erforderlichen Header-Felder in WAP sind für die hier betrachteten Nachrichten-Typen in den Tabellen entsprechend der Figuren 21 A/21B und 22 dargestellt. Diese wurden WAP-209-MMSEncapsulation, Release 2000; Wireless Application Protocol; WAP Multimedia Messaging Service; Message Encapsulation; MMS Proposed SCD 1.0 entnommen. Nach WAP-203-WSP, Version 4-May-2000; Wireless Application Protocol, Wireless Session Protocol Specification; Chapter 8.4: "Header Encoding" besteht jedes Header-Feld aus einem Feld-Namen, gefolgt von einem Feld-Wert, der aus mindestens einem Octet besteht. Die Zuweisung von hexadezimalen Werten zu den Feld-Namen der WAP Messages ist in der Tabelle entsprechend Figur 20 aufgeführt.
Diese weitere Option beruht auf der zu den vorausgehenden Ausführungsbeispielen eingeführten Definition eines HeaderFeldes zur eindeutigen Kennzeichnung eines Elementes einer MM, dem Header-Feld *X-Mms -Content-ID,* das im Body der MM dem Element der MM als Header-Feld voransteht und das Element eindeutig kennzeichnet.

Abweichend von den vorausgegangenen Vorschlägen basiert die Beschreibung eines Elementes der MM hier auf einem einzigen Header-Feld X-Mms-Content-ID, das in den Header der MM zur Benachrichtigung des Empfängers integriert wird, und das die nötigen Informationen (für die Benachrichtigung des Empfängers z.B. über Anzahl, Typ, Größe, Format der für ihn bereitgehaltenen Datensätze der MM) durch einen oder mehrere Parameter aus der folgenden Liste beschreibt.
- *Name* beschreibt den Namen des MM-Elements;
- *Type* beschreibt den Typ und das Format des MM-Elements;
- *Size* beschreibt die Größe des MM-Elements in Bytes;
- *External-Link* zeigt an, dass das Element eine Verknüpfung auf Inhalte außerhalb der MM enthält;
- *External-Link-Size* gibt an, welches Datenvolumen zum Auflösen der externen Referenz zusätzlich heruntergladen werden muß;
- *Related-ID* gibt an, welches Element der MM mit dem Element in Bezug steht und bei einem partiellen Herunteralden der MM ebenfalls geladen werden sollte (Mehrfachverwendung möglich.

Allgemein ausgedrückt wird also jetzt das Identifikationssignal für einen oder mehrere zugeordnete Datensätze in einem einzigen, zusätzlichen Headerfeld vom jeweiligen Sender wie z.B. einem ersten Mobilfunkgerät und/oder zuständigen Server in einer MMS Empfängerbenachrichtigung zum Empfänger wie z.B. zu einem zweiten Mobilfunkgerät codiert übertragen. Dadurch sind Reihenfolgen- und Zuordnungsprobleme, wie sie etwaig bei der Verwendung mehrerer Headerfelder zwischen diesen selbst und/oder den zugeordneten Datensätzen auftreten könnten, von vornherein vermieden.

Weiterhin sollen zusätzlich zu den bereits zu den vorausgehenden Ausführungsbeispielen beschriebenen auch folgende Informationen als Parameter codiert werden können:
*1. Original-Type* beschreibt den Typ des MM-Elements vor der Transcodierung durch die MMS Verbindungseinheit (M-SR);
*2. Original-Size* beschreibt die Größe des MM-Elements vor der Transcodierung durch die MMS Verbindungseinheit (M-SR) in Bytes;

Durch die Zusammenfassung aller für ein MM-Element relevanten Informationen in einem einzigen Header-Feld, kann auf eine Einhaltung der Header-Reihenfolge, wie sie bei den vorhergehenden Ausführungsbeispielen vorausgesetzt wird, verzichtet werden.

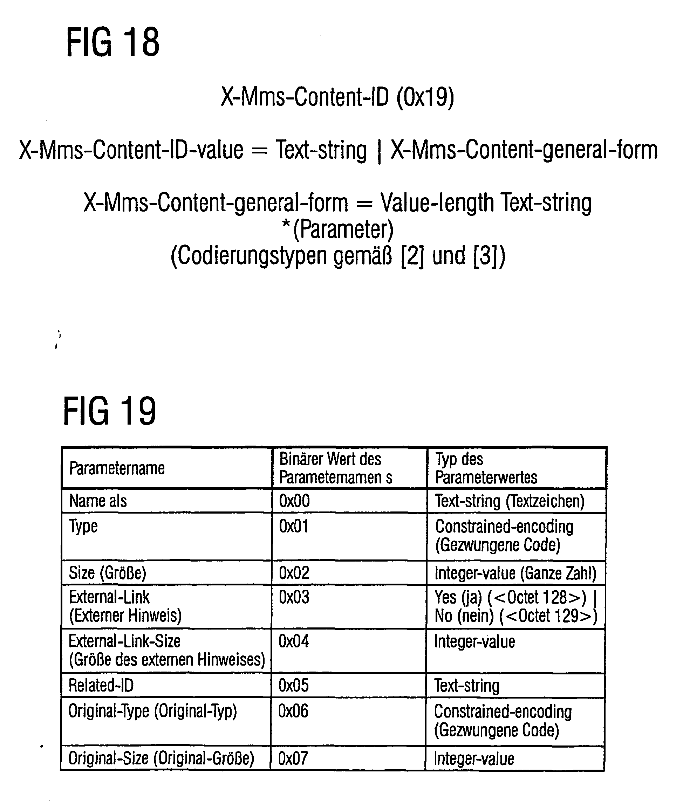

In Figur 18 ist das zum Zwecke der detaillierten Benachrichtigung des Empfängers einer MM gemäß WAP neu eingeführte, einzige Header-Feld einschließlich der Codierung von Feld-Name und Feld-Wert aufgeführt. Die Tabelle entsprechend Figur 20 enthält die Zuweisung von hexadezimalen Werten zu den Feld-Namen. Die Tabelle entsprechend Figur 19 enthält die Zuweisung von hexadezimalen Werten zu den Parameternamen und weiterhin die zur Codierung der Parameterwerte zu verwendenden Typen. Die um die entsprechenden Header-Felder ergänzten WAP Nachrichten sind in den Tabellen 21A/21B und 22 aufgelistet. Alle Veränderungen und Ergänzungen in den Tabellen zum heutigen Stand der Technik sind dabei eingerahmt.

### Ausführungsbeispiel:

Im nun folgenden Ausführungsbeispiel, das auf der Definition der beschriebenen Nachrichten durch das WAP-Forum basiert, wird detailliert auf die in den WAP Nachrichten benutzten Header-Felder eingegangen. Dabei wird beispielhaft folgendes Szenario angenommen: *M-UA_A* (Markus Trauberg) verschickt eine Multimedia Message MM_{A} bestehend aus einem Text, einem MP3-Audio, einem JPEG-Bild, einem MPEG-4-Video und einer SMIL (synchronized multimedia integration language)-Präsentationsbeschreibung an einen Empfänger *M-UA_B* (Andreas Schmidt). Zur komfortablen und differenzierten Nutzung durch den Empfänger werden Beschreibungen der Elemente der MM dem Header der MM gemäß dieser Erfindungsmeldung zugefügt. Die Daten werden in den Nachrichten *M-Sreq* und *M-Nind* an den Empfänger übertragen. Empfänger Andreas Schmidt lädt die komplette MM auf sein Endgerät. Die folgenden Nachrichten werden zwischen den Einheiten übertragen.

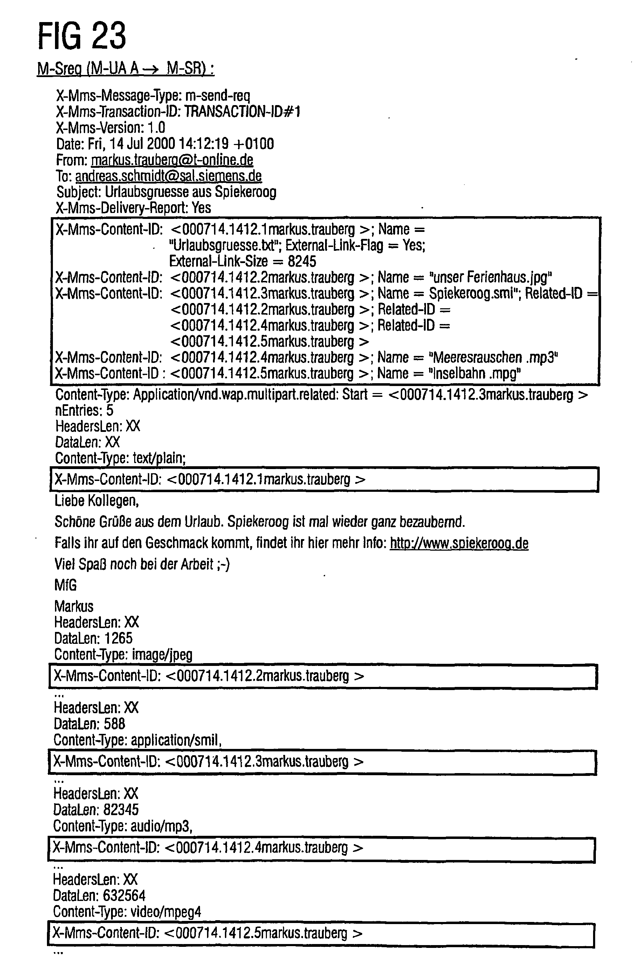

MM_{A} wird an einen Adressaten verschickt. Deren Inhalt ist in Figur 23 beispielhaft abgebildet.

In der Message sind im Header die zusätzlichen Informationsblöcke, d.h. allgemein ausgedrückt die ein oder mehreren Parameter über die MM-Elemente codiert. Darin werden auch die Beziehungen zwischen den Elementen der MM beschrieben: So enthält die Beschreibung der Präsentationsbeschreibung (*.smil) Verweise auf die darin referenzierten Elemente image/jpeg, audio/mp3 und video/mpeg4 in Form der entsprechenden Content-IDs.
Die Beschreibung des Textes enthält die Information, dass ein Verweis auf ein externes Objekt enthalten ist, das 8245 Byte Daten umfasst.

Nach dem Stand der Technik wird die Sendeanfrage (WAP: *M-Send.req*) des MMS User Agent A mit einer Nachricht (in WAP:*M-Send.conf*) vom M-SR quittiert. Im Rahmen dieser EM wird diese Message nicht modifiziert und daher hier nicht aufgeführt.

### M-Nind (M-SR - M-UA-B) :

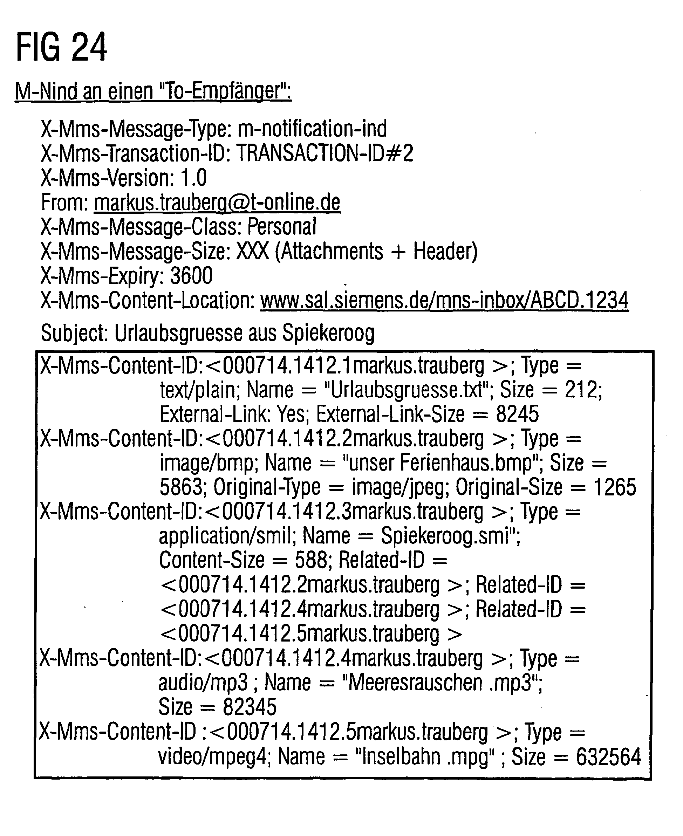

Im MMS (multimedia services) entsprechend 3G TS 23.140 version 3.0.1, Release 1999; Third Generation Partnership Project; Technical Specification Group Terminals; Multimedia Messaging Service (MMS); Functional Description; Stage 2 und WAP-209-MMSEncapsulation, Release 2000; Wireless Application Protocol; WAP Multimedia Messaging Service; Message Encapsulation; MMS Proposed SCD 1.0 ist vorgesehen, einen Empfänger einer MM über neue Nachrichten, die für ihn vorliegen, zu informieren. Die Nachricht *M-Nind (*in WAP: *M-Notification.ind)* dient der Benachrichtigung der Adressaten über zum Herunterladen bereitliegende MMs. Ihr Inhalt ist beispielhaft in Figur 24 abgebildet. Folglich existiert in diesem Beispiel eine Empfängerbenachrichtigung an den Empfänger Andreas Schmidt. Die Information über den Speicherplatz der MM_{A} steht dabei in dem Feld *X-Mms-Content-Location.*

Neben den üblichen Feldern zu Beginn der Nachricht können nun alle beschreibenden, nach dieser Variante neuen Elemente der Nachricht *M-Sreq* in die Nachricht *M-Nind* übernommen werden. Zusätzlich werden durch die M-SR noch die Informationen *Type* und *Size* aus den Informationen des Body der Nachricht *M-Sreq* generiert bzw. wird das enthaltene Bild vom Typ image/jpeg in den Typ image/bmp konvertiert, da das Endgerät JPEG-Bilder nicht anzeigen kann. Die entsprechenden Informationen über den ursprünglichen Typ (Original-Type) und die ursprüngliche Dateigröße (Original-Size) sind im entsprechenden Header-Feld ergänzt worden. Der Empfänger kennt nach Erhalt der detailed Notification sowohl die Adresse der MM (wie bisher) als auch die Zusammensetzung aus den einzelnen Elementen und deren *Content-IDs*. Ein Zugriff ist daher auch separat auf einzelne Elemente der MM möglich.

Der korrekte Empfang der Benachrichtigung kann anschließend von dem Empfänger der MM_{A} mit der Nachricht *M-NRind* bestätigt werden, indem die entsprechende Transaction-ID der *M-Nind* zusammen mit einer Statusmeldung zurück zum *MMS Relay* geschickt wird. Dann wird das Herunterladen der MM_{A} durch den Befehl *W-Greq* veranlasst. Die MM wird darauf vom *M-SR* in der Nachricht *M-Rconf* zum *MM-UA A* gesendet.

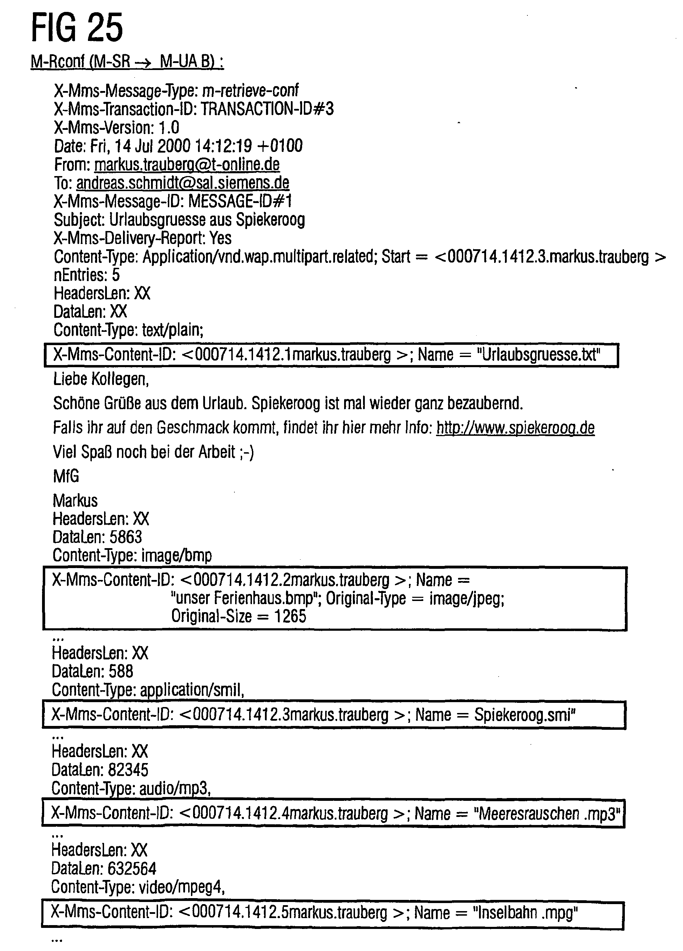

Im Folgenden wird die Nachricht von dem Empfänger Andreas Schmidt komplett auf sein Endgerät heruntergeladen. Die Nachricht *M-Rconf* wird beispielsweise wie in Figur 25 codiert.

Der Empfänger M-UA B quittiert den erfolgreichen Empfang der MM_{A} anschließend gemäß Stand der Technik mit der Nachricht

Zusammenfassend betrachtet wird somit ein Verfahren zur Übertragung zusätzlicher Informationen zur detaillierten Beschreibung einer Multimedianachricht und der darin enthaltenen MM-Elemente im Multimedia-Messaging-Service (MMS) bereitgestellt. Diese Informationen werden insbesondere mit einem einzigen oder mehreren zusätzlichen Header-Feldern in der jeweiligen MMS Empfängerbenachrichtigung vom jeweilig zuständigen Server wie z.B. *M-SR* zum empfangenden User Agent übertragen. Die nötigen Informationen werden vorzugsweise vom sendenden User Agent generiert und in der MMS Sendeanfrage von diesem codiert zum zuständigen Server übertragen. Zusätzlich oder unabhängig hiervon können die nötigen Informationen auch vom zuständigen Vermittlungs-/Bereitstellungs-Server aus dem Datenteil der jeweilig zu versendenden MM extrahiert und dem Empfangenden User Agent in der MMS Empfängerbenachrichtigung codiert übertragen werden. Vorzugsweise kann dem empfangenden User Agent eine oder mehrere der folgenden Informationen über den Inhalt oder einzelne Elemente des Inhalts der zur Zustellung z.B. im zuständigen Server bereitliegenden Nachricht mitgeteilt werden:
- Anzahl der in der MM enthaltenen Elemente
- Größe des Elements der MM (in Octets)
- Typ und Format des Elements der MM
- Kennzeichnung des Elements (Content-ID bzw. URI)
- Name des Elements
- die Verbindung eines oder mehrerer Elemente zu einem oder mehreren anderen Elementen innerhalb der MM (z.B. zwischen Präsentationsbeschreibung und Präsentationselement)
- die Verbindung eines oder mehrerer Elemente zu Inhalten beliebiger Natur außerhalb der MM (z.B. zu HTML/WML-Seiten)
- die jeweilige Größe der verknüpften externen Elemente, die zusätzlich zur MM selbst geladen werden können (in Octets)
- der Typ und das Format des Elements vor einer Transcodierung durch die M-SR
- die Größe des Elements vor einer Transcodierung durch die M-SR (in Octets)

Insbesondere bildet dabei die Kennzeichnung des Elements (Content -ID bzw. URI) den ersten Eintrag im einzigen Headerfeld oder den Inhalt des ersten Headerfeldes bei mehreren benutzten Headerfeldern pro Element bzw. Datensatz.

Bevorzugt kann die Beschreibung eines Elements einer MM jeweils mit einem einzigen Feld ausgeführt werden, das per eindeutiger Identifikationsnummer bzw. Bezeichner auf das Element im Datenteil der Multimedianachricht verweist, und das die weiteren Informationen als Parameter auch noch und nicht in separaten Headerfeldern enthält.

Der Empfänger einer MM kann vorzugsweise, nachdem er eine detaillierte Benachrichtigung erhalten hat, auch nur einzelne Elemente der MM auf sein Endgerät laden. Genauso ist es ggf. möglich, dass die nach dieser Erfindung zusätzlichen Informationen der MMS Empfängerbenachrichtigung *(M-Nind)* auch im Header der MMS Zustellnachricht (*M-Rconf*) ergänzt werden.

Vorzugsweise kann das zusätzliche Header-Felder - wenn nur ein einziges Headerfeld pro Datensatz verwendet wird - in WAP wie folgt codiert werden:
Codierung des Feld-Namens X-Mms-Content-ID im Wertebereich zwischen 00X00 bis 0X7F, insbesondere als 0x19 gemäß der Tabelle nach Figur 20.
Codierung des Feld-Wertes von X-Mms-Content-ID gemäß Figur 9.

Die Informationen als Parameter in diesem einzigen HeaderFeld können insbesondere nach der Tabelle von Figur 19 codiert werden.

Hintergrundangaben zu WAP und MMS, insbesondere zu deren einschlägiger Normenliteratur finden sich beispielsweise an folgenden Stellen:
[1] 3G TS 23.140 version 3.0.1, Release 1999; Third Generation Partnership Project; Technical Specification Group Terminals; Multimedia Messaging Service (MMS); Functional Description; Stage 2
[2] WAP-209-MMSEncapsulation, Release 2000; Wireless Application Protocol; WAP Multimedia Messaging Service; Message Encapsulation; MMS Proposed SCD 1.0
[3] WAP-203-WSP, Version 4-May-2000; Wireless Application Protocol, Wireless Session Protocol Specification; Chapter 8. 4 : "Header Encoding".
[4] WAP-Forum:" WAP MMS Interworking with Internet E-mail; WAP-207-MmsInetInterworking"; Draft Version 01-Jun-2000.
[5] 3G TS 22.140 v.4.0.1 (Juli 2000) : 3rd Generation Partnership Project; Technical Specification Group Services and System Aspects; Service Aspects; Stage 1 Multimedia Messaging Service.
[6] RFC822: "Standard for the Format of ARPA Internet Text Messages", Crocker D., August 1982. URL: ftp://ftp.isi.edu/in-notes/rfc822.txt.
[7] RFC2045: "Multipurpose Internet Mail Extensions (MIME) Part One: Format of Internet Message Bodies", Freed N., November 1996. URL: ftp://ftp.isi.edu/in-notes/rfc2045.txt.
[8] RFC2046: "Multipurpose Internet Mail Extensions (MIME) Part Two: Media Types", Freed N., November 1996. URL: ftp://ftp.isi.edu/in-notes/rfc2046.txt.
[9] RFC2047: "MIME (Multipurpose Internet Mail Extensions) Part Three: Message Header Extensions for Non-ASCII Text", Moore K., November 1996. URL: ftp://ftp.isi.edu/in-notes/rfc2047.txt.

Im Rahmen der Erfindungsbeschreibung ist der einfacheren Schreibweise halber im Kontext auf folgende, gängigen Akronyme Bezug genommen wurden, die zum besseren Verständnis mit ihrer vollständigen Bedeutung nachfolgend aufgelistet sind:
- GSM: Global System for Mobile Communication
- MM: Multimedianachricht (Multimedia Message)
- MMS: Multimedia Messaging Service
- SMS: Short Message Service
- UMTS: Universal Mobile Telecommunication System
- WAP: Wireless Application Protocol
- WSP: Wireless Session Protocol

MMS spezifische Abkürzungen:
- M-UA: MMS Nutzer Applikation
- M-SR: MMS Verbindungseinheit
- M-Sreq: MMS Sendeanfrage
- M-Sconf: MMS Sendebestätigung
- M-Nind: MMS Empfängerbenachrichtigung
- M-NRind: MMS Empfängerbenachrichtigungsbestätigung
- W-Greq: MMS Zustellanfrage
- M-Rconf: MMS Zustellnachricht
- M-Aind: MMS Zustellungsbestätigung
- M-Dind: MMS Zustellstatusbenachrichtigung

## Patentansprüche

1. Verfahren zur Datenübertragung in einem Mobilfunknetz, insbesondere von Text- und/oder Bilddaten mit und ohne Ton,
wobei den Daten zumindest ein Identifikationssignal für einen Datensatz oder mehrere Datensätze zugeordnet und dieses oder diese Identifikationssignal(e) an den Empfänger der Daten übertragen wird oder werden, **dadurch gekennzeichnet, dass** das oder die Identifikationssignal(e) Information über eine verknüpfung des zugeordneten Datensatzes mit zumindest einem anderen Datensatz innerhalb der gesendeten Daten enthält.

2. Verfahren nach Anspruch 1,
**dadurch gekennzeichnet,**
**daß** das oder die Identifikationssignal(e) vor Übertragung des oder der durch diese(s) charakterisierten Datensatzes oder Datensätze übertragen wird und optisch oder akustisch anzeigbar ist.

3. Verfahren nach Anspruch 2,
**dadurch gekennzeichnet,**
**daß** der Empfänger des oder der Identifikationssignal(e) auswählen kann, ob er die Übertragung der durch diese charakterisierten Daten ganz oder teilweise zuläßt.

4. Verfahren nach einem der Ansprüche 1 bis 3,
**dadurch gekennzeichnet,**
**daß** ein Identifikationssignal Information über die Art eines Datensatzes, insbesondere dessen Datenformat, enthält.

5. Verfahren nach einem der Ansprüche 1 bis4,
**dadurch gekennzeichnet,**
**daß** ein Identifikationssignal Information über den Namen eines Datensatzes enthält.

6. Verfahren nach einem der Ansprüche 1 bis 5,
**dadurch gekennzeichnet,**
**daß** ein Identifikationssignal Information über den Inhalt eines Datensatzes enthält.

7. Verfahren nach einem der Ansprüche 1 bis 6,
**dadurch gekennzeichnet,**
**daß** ein Identifikationssignal Information über die Größe eines Datensatzes enthält.

8. Verfahren nach einem der Ansprüche 1 bis 7,
**dadurch gekennzeichnet,**
**daß** ein Identifikationssignal Information über die Anzahl von Datensätzen innerhalb von übertragenen Daten enthält.

9. Verfahren nach einem der Ansprüche 1 bis 8,
**dadurch gekennzeichnet,**
**daß** ein Identifikationssignal Information über eine Verknüpfung mit zumindest einem Datensatz außerhalb der gesendeten Daten enthält.

10. Verfahren nach dem Anspruch 1 oder 9,
**dadurch gekennzeichnet,**
**daß** das Identifikationssignal Information über die Größe desjenigen Datensatzes oder derjenigen Datensätze, mit denen ein übertragener Datensatz verknüpft ist, enthält.

11. verfahren nach einem der Ansprüche 1 bis 10,
**dadurch gekennzeichnet,**
**daß** ein Identifikationssignal Information über die Kennzeichnung eines Datensatzes enthält.

12. Verfahren nach einem der Ansprüche 1 bis 11,
**dadurch gekennzeichnet,**
**daß** das Verfahren im Mobile Messaging Service (MMS) angewandt wird und die übertragenen Daten als Mobile Messages (MM) ausgebildet sind.

13. Verfahren nach einem der Ansprüche 1 bis 12,
**dadurch gekennzeichnet,**
**daß** das Verfahren im Übertragungsstandard UMTS (Universal Mobile Telecommunication System), im GSM (Global system for mobile communication), im GPRS (General packet radio service) und/oder im EDGE(Enhanced Data Rates for GSM enviroments angewandt wird.

14. Verfahren nach einem der Ansprüche 1 bis 13,
**dadurch gekennzeichnet,**
**daß** das oder die Identifikationssignal(e) einem oder mehreren Header-Feldern der übertragenen Daten zugeordnet wird oder werden.

15. Verfahren nach einem der Ansprüche 1 bis 14,
**dadurch gekennzeichnet,**
**daß** ein Identifkationssignal in zumindest einem zusätzlichen Header-Feld abgelegt wird.

16. Verfahren nach einem der Ansprüche 1 bis **15,**
**dadurch gekennzeichnet,**
**daß** das oder die Identifizierungssignal(e) zumindest teilweise vom Versender generiert und bei Übermittlung einer Multimedia message vom Versender (MMS user agent A) zum Service Provider (MMS relay) übersandt werden.

17. Verfahren nach Anspruch 16,
**dadurch gekennzeichnet,**
**daß** der Versender eines oder mehrere der Header-Felder, X-MMS-Content-ID, X-MMS-Content-Name, X-MMS-Content-Type, X-MMS-External-Link-Flag, X-MMS-External-Link-Size generiert.

18. Verfahren nach einem der Ansprüche 1 bis 17,
**dadurch gekennzeichnet,**
**daß** das oder die Identifizierurlgsignal (e) zumindest teilweise aus dem vom Service Provider (MMS Relay) empfangenen Datensatz selbständig ermittelt wird oder werden

19. Verfahren nach Anspruch 18,
**dadurch gekennzeichnet,**
**daß** das MMS Relay eines oder mehrere der Header-Felder X-MMS-Content-ID, X-MMS-Content-Size, X-MMS-Content-Type generiert oder aktualisiert.

20. Verfahren nach einem der Ansprüche 1 bis 19,
**dadurch gekennzeichnet,**
**daß** das oder die Identifizierungssignal(e) jeweils in der Benachrichtigung an den Empfänger (MMS user agent B) durch das MMS Relay des Service Providers über das Vorhandensein eines oder mehrerer neuen Datensätze einer Multimedia message übertragen wird.

21. Verfahren nach einem der Ansprüche 1 bis 20,
**dadurch gekennzeichnet,**
**daß** dem Telekommunikationsgerät des Empfängers eine Wahleinrichtung zugeordnet ist, mittels der dieser nach zumindest teilweiser Kenntnisnahme des oder der Identifikationssignal(e) eine Bestätigung der Empfangsbereitschaft für den Datensatz geben kann, und die Übertragung zum Empfänger erst nach Auslösung der wahleinrichtung ermöglicht ist.

22. verfahren nach Anspruch 21,
**dadurch gekennzeichnet,**
**daß** sich die Empfangsbereitschaft nur auf einen Teil der Daten bezieht und die Übertragung nur dieses Teils des Datensatzes freigeschaltet wird.

23. Verfahren nach einem der Ansprüche 1 bis 22,
**dadurch gekennzeichnet,**
**daß** das oder die zusätzlichen Identifizierungssignal(e) der Benachrichtigung über bereitstehende Daten (M-Notification.ind) und der eigentlichen Datensendung (M-Retrieve.conf) zugefügt werden.

24. Verfahren nach einem der Ansprüche 1 bis 23,
**dadurch gekennzeichnet,**
**daß** die Bereitschaft zum zumindest teilweisen Empfang der bereitstehenden Daten der vom Empfänger an den Provider gesandten Nachricht WSP Get.req zugeordnet ist.

25. Mobiltelekommunikationsgerät (5;6),
**gekennzeichnet dadurch, daß** es zur Durchführung des Verfahrens Schritte nach einem der Ansprüche 1 bis 24 ausgestaltet ist, insbesondere dadurch,
daß dem Mobiltelekommunikationsgerät (5;6) ein Auswahlschalter (25) zur völligen oder teilweisen Bestätigung oder Ablehnung der Empfangsbereitschaft für einen oder mehrere identifizierten Datensatz oder Datensätze (7) zugeordnet ist.

26. Mobiltelekommunikationsgerät nach Anspruch 25,
**dadurch gekennzeichnet,**
**daß** dem Mobiltelekommunikationsgerät (5;6) ein Anzeigemittel (24) zur optischen oder akustischen Anzeige des oder der Identifizierungssignale eines oder mehrerer Datensätze (7) zugeordnet ist.

27. Mobiltelekommunikationsgerät nach dem Anspruch 26,
**dadurch gekennzeichnet,**
**daß** der Auswahlschalter (25) softwareseitig implementiert und über ein Eingabemittel anwählbar ist.

28. Mobiltelekommunikationsgerät (5;6),
**dadurch gekennzeichnet,**
**daß** diesem eine Software zur Belegung von Header-Feldern (17:18;19;20;21;22;23) von Datensendungen mit zumindest einem Identifikationssignal zugeordnet ist.

29. Funkkommunikationssystem, bei dem mindestens eine Komponente zur Durchführung des Verfahrens nach einem der Ansprüche 1 bis 24 ausgestaltet ist.

## Claims

1. Method of transmitting data in a mobile radio network, in particular of text and/or image data with and without sound, with the data being assigned an identification signal for a data record or a number of data records and this identification signal or these identification signals being transmitted to the recipient of the data,
**characterised in that**
the identification signal or identification signals contain information about a linkage of the assigned data record to at least one other data record within the sent data.

2. Method in accordance with claim 1,
**characterised in that**
the identification signal(s) is/are transmitted before the transmission of the data record(s) **characterised by** this signal and can be indicated visually or audibly.

3. Method in accordance with claim 2,
**characterised in that**
the recipient of the identification signal(s) can select whether to allow all or part of the data **characterised by** this/these signal(s) to be transmitted.

4. Method in accordance with one of claims 1 to 3,
**characterised in that**
an identification signal contains information about the type of the data record, especially its data format.

5. Method in accordance with one of claims 1 to 4,
**characterised in that**
an identification signal contains information about the name of a data record.

6. Method in accordance with one of claims 1 to 5,
**characterised in that**
an identification signal contains information about the content of a data record.

7. Method in accordance with one of claims 1 to 6,
**characterised in that**
an identification signal contains information about the size of a data record.

8. Method in accordance with one of the claims 1 to 7,
**characterised in that**
an identification signal contains information about the number of data records within transmitted data.

9. Method in accordance with one of the claims 1 to 8,
**characterised in that**
an identification signal contains information about a link to at least one data record outside the sent data.

10. Method in accordance with one of the claims 9 or 10,
**characterised in that**
an identification signal contains information about the size of that data record or those data records to which a transmitted data record is linked.

11. Method in accordance with one of the claims 1 to 10,
**characterised in that**
an identification signal contains information about the identification of a data record.

12. Method in accordance with one of the claims 1 to 11,
**characterised in that**
the method is applied in the Mobile Messaging Service (MMS) and the transmitted data takes the form of Mobile Messages (MM).

13. Method in accordance with one of the claims 1 to 12,
**characterised in that**
the method in the transmission standard UMTS (Universal Mobile Telecommunication System), in GSM (Global system for mobile communication), in GPRS (General packet radio Service) and/or in EDGE (Enhanced Data Rates for GSM environments) is used.

14. Method in accordance with one of the claims 1 to 13,
**characterised in that**
the identification signal or signals is/are assigned to one or more header fields of the transmitted data.

15. Method in accordance with one of the claims 1 to 14,
**characterised in that**
an identification signal is stored in at least one additional header field.

16. Method in accordance with one of the claims 1 to 15,
**characterised in that**
the identification signal or signals are at least partly generated by the sender and are transmitted on transmission of a multimedia message from the sender (MMS user agent A) to the service provider (MMS relay).

17. Method in accordance with claim 16,
**characterised in that**
the sender generates one or more of the header fields, X-MMS-Content-ID, X-MMS-Content-Name, X-MMS-Content-Type, X-MMS-External-Link-Flag, X-MMS-External-Link-Size.

18. Method in accordance with one of the claims 1 to 17,
**characterised in that**
the identification signal(s) will been generated at least partly from the data record received from the service provider (MMS Relay)

19. Method in accordance with claim 18,
**characterised in that**
the MMS Relay generates or updates one or more of the header fields X-MMS-Content-ID, X-MMS-Content-Size, X-MMS-Content-Type.

20. Method in accordance with one of the claims 1 to 19,
**characterised in that**
the identification signal or signals will be transmitted in each case in the notification to the recipient (MMS user agent B) by the MMS Relay of the service provider about the presence of one or more new data records of a multimedia message.

21. Method in accordance with one of the claims 1 to 20,
**characterised in that**
the telecommunications device of the recipient is assigned to a selection facility through which the latter, after at least partly noting the identification signal or signals, can give a confirmation that they are ready to receive the message and that transmission to the recipient is not enabled until after the selection facility has been initiated.

22. Method in accordance with claim 21,
**characterised in that**
the readiness to receive only relates to a part of the data and that the transmission of only this part of the data record is enabled.

23. Method in accordance with one of the claims 1 to 22,
**characterised in that**
the notification about the availability of data (M-Notification.ind) and of the actual sending of the data (M-Retrieve.conf) is added to the additional identification signal or signals.

24. Method in accordance with one of the claims 1 to 23,
**characterised in that**
the readiness for at least partial receipt of the available data is assigned to the message WSP Get.req sent by the recipient to the provider.

25. Mobile telecommunications device (5; 6)
**characterised in that**
it is designed to execute the method steps in accordance with one of the claims 1 to 24, especially by
the mobile telecommunications device (5; 6) being assigned to a selection switch (25) for complete or partial confirmation or rejection of readiness to receive one wall more identified data record or data records (7).

26. Mobile telecommunications device in accordance with claim 25,
**characterised in that**
the mobile telecommunications device (5; 6) is assigned a means of display (24) for visual or audible indication of the identification signal or signals of one or more data records (7) .

27. Mobile telecommunications device in accordance with claim 26,
**characterised in that**
the selection switch (25) is implemented on the software side and can be selected via a means of input.

28. Mobile telecommunications device (5; 6),
**characterised in that**
this device is assigned software for occupying header fields (17; 18; 19; 20; 21; 22; 23) of data transmissions with the least one identification signal.

29. Radio communications system in which at least one component is designed to carry out the method in accordance with one of claims 1 to 24.

## Revendications

1. Procédé de transmission de données dans un réseau de téléphonie mobile, et plus particulièrement de données de type texte et/ou image, avec et sans son, au moins un signal d'identification pour un jeu de données ou plusieurs jeux de données étant associé aux données et ce ou ces signaux d'identification étant transmis au destinataire des données, **caractérisé en ce que** le ou les signaux d'identification contiennent une information sur une mise en relation du jeu de données y associé avec au moins un autre jeu de données parmi les données émises.

2. Procédé selon la revendication 1, **caractérisé en ce que** le ou les signaux d'identification sont transmis avant la transmission du ou des jeux de données **caractérisés par** ledit ou lesdits signaux d'identification et peuvent être indiqués optiquement ou acoustiquement.

3. Procédé selon la revendication 2, **caractérisé en ce que** le destinataire du ou des signaux d'identification peut choisir d'autoriser en tout ou en partie la transmission des données **caractérisées par** ledit ou lesdits signaux d'identification.

4. Procédé selon l'une des revendications 1 à 3, **caractérisé en ce qu'**un signal d'identification contient une information sur le type d'un jeu de données, et plus particulièrement sur le format des données de celui-ci.

5. Procédé selon l'une des revendications 1 à 4, **caractérisé en ce qu'**un signal d'identification contient une information sur le nom d'un jeu de données.

6. Procédé selon l'une des revendications 1 à 5, **caractérisé en ce qu'**un signal d'identification contient une information sur le contenu d'un jeu de données.

7. Procédé selon l'une des revendications 1 à 6, **caractérisé en ce qu'**un signal d'identification contient une information sur la taille d'un jeu de données.

8. Procédé selon l'une des revendications 1 à 7, **caractérisé en ce qu'**un signal d'identification contient une information sur le nombre de jeux de données parmi les données transmises.

9. Procédé selon l'une des revendications 1 à 8, **caractérisé en ce qu'**un signal d'identification contient une information sur une mise en relation avec au moins un jeu de données en dehors des données émises.

10. Procédé selon l'une des revendications 1 à 9, **caractérisé en ce que** le signal d'identification contient une information sur la taille du jeu de données ou des jeux de données avec lesquels un jeu de données transmis est en relation.

11. Procédé selon l'une des revendications 1 à 10, **caractérisé en ce qu'**un signal d'identification contient une information sur le marquage d'un jeu de données.

12. Procédé selon l'une des revendications 1 à 11, **caractérisé en ce que** le procédé est appliqué dans le service de messagerie mobile (MMS) et **en ce que** les données transmises se présentent sous la forme de messages mobiles (MM).

13. Procédé selon l'une des revendications 1 à 12, **caractérisé en ce que** le procédé est appliqué dans le standard de transmission UMTS (Universal Mobile Telecommunication System), GSM (Global System for Mobile communication), GPRS (General Packet Radio Service) et/ou EDGE (Enhanced Data rates for GSM Environments).

14. Procédé selon l'une des revendications 1 à 13, **caractérisé en ce que** le ou les signaux d'identification sont associés à un ou plusieurs champs d'en-tête des données transmises.

15. Procédé selon l'une des revendications 1 à 14, **caractérisé en ce qu'**un signal d'identification est déposé dans au moins un champ d'en-tête additionnel.

16. Procédé selon l'une des revendications 1 à 15, **caractérisé en ce que** le ou les signaux d'identification sont générés au moins en partie par l'expéditeur et sont transmis lors de la transmission d'un message multimédia par l'expéditeur (MMS user agent A) au fournisseur de services (MMS relay).

17. Procédé selon la revendication 16, **caractérisé en ce que** l'expéditeur génère un ou plusieurs des champs d'en-tête X-MMS Content ID, X-MMS Content Name, X-MMS Content Type, X-MMS External Link Flag, X-MMS External Link Size.

18. Procédé selon l'une des revendications 1 à 17, **caractérisé en ce que** le ou les signaux d'identification sont déterminés de manière autonome au moins en partie à partir du jeu de données reçu par le fournisseur de services (MMS Relay) .

19. Procédé selon la revendication 18, **caractérisé en ce que** le MMS Relay génère ou actualise un ou plusieurs des champs d'en-tête X-MMS Content ID, X-MMS Content Size, X-MMS Content Type.

20. Procédé selon l'une des revendications 1 à 19, **caractérisé en ce que** le ou les signaux d'identification sont transmis respectivement dans la notification au destinataire (MMS user agent B) par le MMS Relay du fournisseur de services via la présence d'un ou de plusieurs nouveaux jeux de données d'un message multimédia.

21. Procédé selon l'une des revendications 1 à 20, **caractérisé en ce qu'**est associé à l'appareil de télécommunication du destinataire un dispositif de sélection au moyen duquel celui-ci peut donner une confirmation de l'attente de réception du jeu de données après avoir pris connaissance au moins partiellement du ou des signaux d'identifications et **en ce que** la transmission au destinataire n'est possible qu'après le déclenchement du dispositif de sélection.

22. Procédé selon la revendication 21, **caractérisé en ce que** l'attente de réception concerne uniquement une partie des données et **en ce qu'**est autorisée la transmission uniquement de cette partie du jeu de données.

23. Procédé selon l'une des revendications 1 à 22, **caractérisé en ce que** le ou les signaux d'identification additionnels sont ajoutés à la notification via des données disponibles (M-Notification.ind) et à l'envoi de données à proprement parler (M-Retrieve.conf).

24. Procédé selon l'une des revendications 1 à 23, **caractérisé en ce que** l'attente de réception au moins partielle des données disponibles est associée au message WSP Get.reg envoyé par le destinataire au fournisseur de services.

25. Appareil de télécommunication mobile (5 ; 6), **caractérisé en ce qu'**il est réalisé pour exécuter les étapes d'un procédé selon l'une des revendications 1 à 24, et plus particulièrement **en ce qu'**est associé, à l'appareil de télécommunication mobile (5 ; 6), un commutateur de sélection (25) pour confirmer ou refuser, en tout ou en partie, l'attente de réception pour un ou plusieurs jeux de données identifiés (7).

26. Appareil de télécommunication mobile selon la revendication 25, **caractérisé en ce qu'**est associé, à l'appareil de télécommunication mobile (5 ; 6), un moyen d'indication (24) pour l'indication optique ou acoustique du ou des signaux d'identification d'un ou de plusieurs jeux de données (7).

27. Appareil de télécommunication mobile selon la revendication 26, **caractérisé en ce que** le commutateur de sélection (25) est implémenté dans le logiciel et est sélectionnable via un moyen de saisie.

28. Appareil de télécommunication mobile (5 ; 6), **caractérisé en ce que** lui est associé un logiciel pour occuper des champs d'en-tête (17 ; 18 ; 19 ; 20 ; 21 ; 22 ; 23) d'envois de données par au moins un signal d'identification.

29. Système de radiocommunication dans lequel au moins un composant est réalisé pour exécuter le procédé selon l'une des revendications 1 à 24.
